# FASCICULE DE BREVET EUROPEEN

(11) **EP 4 491 927 B1**
(45) Date de publication et mention de la délivrance du brevet: **03.12.2025**
(21) Numéro de dépôt: 24187027.8
(22) Date de dépôt: 08.07.2024
(51) Int. Cl.: F16L 39/04, F16L 59/14, F16L 59/18

(54) **SYSTÈME DE TRANSFERT DE FLUIDE, DISPOSITIF JOINT TOURNANT COMPORTANT UN TEL SYSTÈME, EMPILEMENT DE DISPOSITIFS JOINT TOURNANT ET INSTALLATION D'EXPLOITATION DE FLUIDES**
FLÜSSIGKEITSÜBERTRAGUNGSSYSTEM, DREHDICHTUNGSVORRICHTUNG MIT SOLCH EINEM SYSTEM, STAPEL VON DREHDICHTUNGSVORRICHTUNGEN UND FLÜSSIGKEITSBETRIEBSANLAGE
FLUID TRANSFER SYSTEM, ROTARY JOINT DEVICE COMPRISING SUCH A SYSTEM, STACK OF ROTARY JOINT DEVICES AND FLUID EXPLOITATION INSTALLATION

(30) Priorité: 12.07.2023 FR 2307477
(43) Date de publication de la demande: 15.01.2025
(73) Titulaire: ETI Group, 13420 Gémenos (FR)
(72) Inventeur: EBLE, Jean-Claude, GATTIERES (FR); MENARDO, Philippe, Beaulieu-sur-Mer (FR); SAINT-MICHEL, Laurent, AUBAGNE (FR)
(74) Mandataire: Santarelli

(56) Documents cités:
- EP-B1- 1 549 874
- WO-A1-2020/016406
- US-A- 3 984 059

## Description

### Domaine technique de l'invention

L'invention concerne une installation d'exploitation de fluide.

Elle concerne aussi un système de transfert de fluide utilisé dans une telle installation. L'invention s'applique notamment pour un fluide présentant au moins un état liquide ou un état gazeux en fonction d'une température à laquelle il est porté, et dont l'état, liquide ou gazeux, a une forte incidence sur un volume occupé par une même quantité de fluide.

Une telle installation d'exploitation de fluides peut être, par exemple, une installation d'exploitation d'hydrocarbures sur une plateforme du type offshore.

L'invention peut par exemple concerner un système de transfert de fluide, immergé ou en surface, utilisé pour un transfert d'hydrocarbures, par exemple entre un PLEM (abréviation de « Pipe Line End Manifold ») immergé et tout navire flottant amarré à proximité, ou un navire et un transporteur. Un tel navire inclut un FPSO (« Floating Production Storage Offloading unit »), un FSO (« Floating Storage and Offloading"), un FSRU (« Floating Storage and Regasification Unit »), un FLNG (« Floating Liquified Natural Gas ») ou autre.

L'invention peut par exemple trouver une application particulière pour le transfert de gaz liquéfié, par exemple d'ammoniac, ou de méthane liquide (qui est liquide à une température inférieure à environ -160°C) qui est un constituant principal du gaz naturel liquéfié (GNL) après séparation de l'eau, du CO₂ et des constituants du gaz de pétrole liquéfié (GPL).

### Etat de la technique

Le brevet européen EP 1 549 874 décrit un système de joint tournant destiné à être monté dans une ligne de transfert d'un liquide cryogénique, tel que du gaz naturel liquéfié, et du retour de gaz froid lié au transfert du liquide cryogénique. Le système est du type comprenant un dispositif de joint tournant pour le passage du liquide cryogénique et un dispositif de joint tournant pour le retour du gaz froid, chaque dispositif comprenant un conduit pourvu d'une partie de conduit fixe et une partie de conduit rotative par rapport à la partie de conduit fixe et des moyens de guidage en rotation interposés entre les deux parties de conduit. Le système est caractérisé en ce que le dispositif de joint tournant pour le passage du retour de gaz est intégré au dispositif de joint tournant pour le passage du liquide cryogénique. L'invention est utilisable pour des stations offshore.

Le brevet européen EP 2 356 018 décrit une installation pour un transfert de fluide entre une unité offshore d'extraction de gaz naturel et de liquéfaction de celui-ci, et un transporteur de gaz naturel liquéfié (GNL). Pour effectuer le transfert, l'installation comprend, d'un côté, une conduite cryogénique de transfert de GNL entre l'unité offshore et le transporteur, et d'un autre côté, une conduite de retour de gaz.

Dans un cas particulier d'exportation de gaz naturel (GN), une difficulté est principalement liée à une forte dépendance d'un état du gaz naturel (principalement gazeux ou liquide) en fonction de conditions de température et de pression d'un environnement dans lequel le GN évolue.

En effet, le GN se trouve naturellement dans un état gazeux, sous pression, à une température positive, i.e. au moins égale à 0°C (typiquement environ 120°C à 300 bars dans une roche réservoir), tandis qu'il se trouve dans un état liquide lorsqu'il est amené à une température inférieure à environ -160°C, à 1 bar absolu, après raffinage.

Le gaz naturel à l'état liquide est désigné GNL (gaz naturel liquéfié).

Ce changement d'état a une incidence forte sur un volume occupé par une même quantité de GN. Il est possible de stocker environ 600 fois plus de GN à l'état liquide qu'à l'état gazeux dans un même volume. Par conséquent, il est bien plus intéressant de stocker ou transporter du GN à l'état liquide (i.e. du GNL) qu'à l'état gazeux.

Or, stocker du GNL requiert une isolation thermique très efficace afin qu'il puisse conserver son état liquide et ne pas repasser à un état gazeux car la pression du fluide serait alors susceptible d'augmenter jusqu'à approximativement 600 bars.

Cependant, lors d'un transfert de GN, par exemple depuis un navire jusqu'à un transporteur, une bouée ou même un site terrestre, tandis que le GN est initialement dans un état liquide, une partie du GN se vaporise. De préférence, cette partie vaporisée doit alors être renvoyée à une unité de liquéfaction, par exemple située sur le navire, pour la raffiner et la liquéfier à nouveau pour minimiser toute perte de production et une éventuelle pollution liée à des gaz à effet de serre.

Dans une installation comme celle décrite dans le brevet susvisé ou assimilée, une unité flottante en mer a donc pour fonction d'extraire, raffiner, transformer et/ou transférer des fluides bruts, ou de l'énergie électrique obtenus par combustion de GN vaporisé.

Un exemple non limitatif d'une telle unité flottante est connu selon la terminologie anglaise sous le nom de "FPSO" ("Floating Production Storage Offloading unit").

Une telle unité flottante est par exemple formée par un navire, qui est mobile du fait de son environnement, autour d'une tourelle d'amarrage, qui est géostationnaire, via un palier principal. Le navire peut être assujetti temporairement à la tourelle.

Une telle installation peut comporter des conduits qui forment un réseau de canalisations subaquatiques qui permet une communication fluidique pour transférer un fluide entre le fond marin et le navire.

Pour cela, l'installation comprend au moins un dispositif joint tournant, ou un empilement de dispositifs joint tournant connu sous le nom anglo-saxon de "swivel stack".

Pour assurer l'étanchéité entre le navire et la tourelle et ainsi assurer l'intégrité du transfert de fluide, le dispositif joint tournant est pourvu d'une première partie, dite fixe et considérée géostationnaire, assujettie à la tourelle et d'une deuxième partie, dite mobile, assujettie au navire. La deuxième partie du dispositif joint tournant est donc mobile en rotation par rapport à la première partie, géostationnaire, du dispositif joint tournant.

Un dispositif joint tournant est en outre généralement pourvu de plusieurs organes d'étanchéité dynamique, dits joints dynamiques, disposés dans des espaces, souvent circulaires, ménagés entre la première partie fixe et la deuxième partie mobile du dispositif joint tournant.

Dans l'exemple de l'exploitation de gaz naturel, ce dernier est pompé, puis généralement débarrassé de sable, d'eau ou d'autres gaz qu'il peut contenir pour limiter voire éviter d'entartrer ou boucher des conduites. Une telle séparation se fait par exemple par distillation pour les gaz (éthane, propane, H₂S, CO₂...), et par décantation ou autre pour éliminer du sable et de l'eau. Le GN peut ensuite être liquéfié, puis poussé par des conduits flottants, par exemple des tuyaux flexibles, vers une entité de stockage et/ou de transport, par exemple un transporteur de gaz d'exportation (par exemple un méthanier), par exemple amarré en tandem, ou une bouée d'amarrage, pour ensuite être transféré vers une raffinerie à terre, ou même directement un site particulier, à terre.

Au moins un premier dispositif joint tournant peut donc se trouver sur le navire afin d'extraire le GN et l'envoyer vers une installation de séparation, tandis qu'au moins un autre dispositif joint tournant peut être disposé pour transférer le GNL depuis une unité de liquéfaction vers l'entité de stockage et/ou de transport, et pour réacheminer un gaz vers l'unité de liquéfaction.

Le transfert de GNL implique ainsi un passage par au moins un dispositif joint tournant capable de supporter la température cryogénique du GNL (soit environ entre -160°C et -100°C et entre 1 bar et 25 bars absolus) pour qu'il soit maintenu à l'état liquide autant que possible.

### Exposé de l'invention

L'invention a pour objet, selon un premier aspect, un système de transfert de fluide configuré pour équiper une installation d'exploitation de fluides, le système de transfert de fluide comportant :
- un conduit de transfert de liquide, configuré pour acheminer un gaz liquéfié, et
- un conduit de transfert de gaz, configuré pour acheminer un gaz sous forme de vapeur,

caractérisé en ce que le conduit de transfert de liquide et le conduit de transfert de gaz sont concentriques, le conduit de transfert de gaz entourant le conduit de transfert de liquide,
et en ce que le système de transfert de fluide comporte en outre :
   - un organe tampon, disposé entre le conduit de transfert de liquide et le conduit de transfert de gaz et entourant au moins en partie le conduit de transfert de liquide, l'organe tampon étant configuré pour transférer une partie vaporisée du gaz liquéfié circulant dans le conduit de transfert de liquide depuis le conduit de transfert de liquide vers le conduit de transfert de gaz.

Un fluide désigne ici tout milieu déformable, incluant principalement un liquide et un gaz, par opposition à un milieu solide. Un fluide désigne donc ici indifféremment un liquide ou un gaz, ou un mélange de liquide et de gaz.

Si l'invention s'applique notamment à du transfert de GNL comme gaz liquéfié, elle peut néanmoins s'appliquer à tout gaz ou mélange de gaz, diphasique dans des conditions dites « normales » de transfert, comme par exemple, sans être limitatif, du gaz de pétrole liquéfié (GPL), du dioxyde de carbone (CO₂), éventuellement sous pression, par exemple à une pression au moins égale à 5,11 bar et une température au moins égale à -56°C, de l'ammoniac (NH₃), de l'azote liquéfié (noté LN₂), de l'argon liquéfié (ArL), de l'hélium liquéfié (HeL), etc.

Dans un exemple de mise en œuvre particulier, le gaz sous forme de vapeur circulant dans le conduit de transfert de gaz comporte du gaz liquéfié vaporisé.

Le système de transfert de fluide selon l'invention permet de contribuer à une isolation thermique du conduit de transfert de liquide formant une voie centrale dédiée à du gaz liquéfié, en utilisant le conduit de transfert de gaz pour l'entourer, et permet de séparer les deux flux (de liquide et de gaz) par un volume intermédiaire constitué par l'organe tampon.

Ainsi, le conduit de transfert de gaz gaine le conduit de transfert de liquide et forme une barrière thermique et un amortisseur différentiel de pression.

Du gaz évaporé à partir du liquide peut ainsi circuler dans l'organe tampon et s'échapper dans le conduit de transfert de gaz.

Le conduit de transfert de gaz est alors configuré pour récupérer et faire circuler une partie, ou fraction, évaporée du liquide.

Des fuites générées dans le système peuvent alors être récupérées.

Dans un exemple de mise en œuvre, un conduit de transfert de gaz est un conduit de retour de gaz, configuré pour acheminer une partie vaporisée du gaz liquéfié.

Un tel système de transfert de fluide est ainsi capable de transférer le gaz liquéfié, par exemple vers une unité de transport et/ou de stockage, et de renvoyer la fraction vaporisée, par exemple vers une unité de liquéfaction.

Un tel système de transfert de fluide s'applique par exemple à des installations capables de purifier du gaz naturel extrait de gisements sous-marins de pétrole et de gaz, de le liquéfier et de le stocker pour enfin le transférer soit par l'intermédiaire d'un empilement de dispositifs joint tournant, ou d'une bouée d'amarrage et de chargement - non limité à l'un ou l'autre ou à l'un de chacun - vers un méthanier assurant le transfert vers une raffinerie ou un port, soit par l'intermédiaire d'une bouée de déchargement permettant à un méthanier d'alimenter une raffinerie par un pipeline sous-marin cryogénique.

En utilisation, une pression dans le conduit de transfert de gaz est généralement supérieure à celle dans le conduit de transfert de liquide.

Grace à l'organe tampon, le système peut ainsi tendre vers un équilibre des pressions. Lorsque du liquide passe du conduit de transfert de liquide vers l'organe tampon, il va être dans une zone plus chaude que le conduit de transfert de liquide et il va donc se vaporiser et automatiquement contrebalancer la pression de liquide.

L'organe tampon comporte ainsi un volume interne formant au moins un sas entre le conduit de transfert de liquide et le conduit de transfert de gaz.

Par exemple, l'organe tampon comporte une entrée de fluide configurée pour introduire du fluide, depuis le conduit de transfert de liquide, dans l'organe tampon.

Une paroi du conduit de transfert de liquide peut par exemple comporter au moins un orifice débouchant dans l'organe tampon.

Par exemple, l'entrée de fluide comporte l'au moins un orifice de la paroi du conduit de transfert de liquide.

Par exemple, l'organe tampon comporte une sortie de fluide configurée pour extraire du fluide depuis l'organe tampon vers le conduit de transfert de gaz.

Une paroi du conduit de transfert de gaz peut par exemple comporter au moins un orifice débouchant dans l'organe tampon.

Par exemple, la sortie de fluide comporte l'au moins un orifice de la paroi du conduit de transfert de gaz.

Dans un exemple de réalisation, le système de transfert de fluide comporte au moins un organe d'étanchéité dynamique.

L'organe d'étanchéité dynamique peut être disposé dans l'organe tampon, par exemple à une interface entre l'organe tampon et le conduit de transfert de liquide et/ou le conduit de transfert de gaz.

Dans un exemple de réalisation, l'organe d'étanchéité dynamique comporte un joint, un palier, ou un ensemble composite.

Dans un autre exemple de réalisation, notamment si le fluide n'a pas de pouvoir lubrifiant, l'organe d'étanchéité dynamique peut comporter un palier.

Un palier permet notamment de pouvoir produire une fuite naturelle.

De manière générale dans le cadre de la présente invention, un joint peut être réalisé en polyéthylène de masse molaire très élevée (généralement désigné par l'acronyme « UHMWPE »).

De manière générale dans le cadre de la présente invention, un palier peut être réalisé en PTFE chargé de poudre ou fibres de carbone.

Par exemple, l'entrée de fluide dans l'organe tampon comporte un passage de fuite, par exemple produit par un organe d'étanchéité dynamique.

Par exemple, la sortie de fluide de l'organe tampon comporte un passage de fuite, par exemple produit par un organe d'étanchéité dynamique.

Dans un exemple de réalisation, l'entrée de fluide comporte au moins une soupape de sécurité.

La soupape de sécurité est par exemple configurée pour équilibrer une surpression entre le conduit de transfert de liquide et l'organe tampon.

Elle permet ainsi de gérer des fuites de fluide, depuis le conduit de transfert de liquide, dans l'organe tampon puis vers le conduit de transfert de gaz.

Ainsi, toute surpression dans le conduit de transfert de liquide est libérée dans l'organe tampon par au moins une soupape de sécurité calibrée.

Par exemple, l'au moins un orifice de la paroi du conduit de transfert de liquide est muni de l'au moins une soupape de sécurité.

Dans un exemple de réalisation, la sortie de fluide comporte au moins une soupape d'échappement.

La soupape d'échappement est par exemple configurée pour équilibrer une surpression entre l'organe tampon et le conduit de transfert de gaz.

Ainsi, toute surpression dans l'organe tampon est libérée dans le conduit de transfert de gaz par au moins une soupape d'échappement calibrée.

Par exemple, l'au moins un orifice de la paroi du conduit de transfert de gaz est muni de l'au moins une soupape d'échappement.

Dans un exemple de réalisation, l'organe tampon comporte au moins une paroi intérieure formant un labyrinthe pour un écoulement fluidique dans l'organe tampon. Dans un exemple de réalisation, la paroi intérieure divise le volume interne de l'organe tampon en au moins deux sas, l'entrée de fluide étant disposée dans un premier des deux sas, et la sortie de fluide étant disposée dans un deuxième des deux sas.

Ainsi, le premier des deux sas se trouve être le plus interne des deux sas, c'est-à-dire juxtaposé au conduit de transfert de liquide, et le deuxième des deux sas est le plus externe des deux sas, c'est-à-dire juxtaposé au conduit de transfert de gaz.

Par exemple, la paroi intérieure est configurée pour permettre un passage de fluide du premier sas vers le deuxième sas.

Dans un exemple de réalisation, la paroi intérieure comporte au moins un orifice de transmission de fluide.

Dans un exemple de réalisation, la paroi intérieure comporte au moins une soupape d'équilibrage, par exemple disposée dans l'orifice de transmission de fluide.

La soupape d'équilibrage est par exemple configurée pour équilibrer une pression entre les deux sas de l'organe tampon.

Par exemple, la paroi intérieure peut comporter au moins deux parois, ou parties, divisant ainsi le volume interne de l'organe tampon en au moins un troisième sas. Le troisième sas est alors formé entre le premier sas et le deuxième sas.

Au moins l'une des parties de la paroi intérieure, voire chacune des parties, peut alors comporter un orifice de transmission de fluide.

Le cas échéant, une soupape d'équilibrage formée dans la partie de la paroi intérieure entre le premier sas et le troisième sas, en particulier dans l'orifice de transmission de fluide correspondant, constitue alors une première soupape d'équilibrage.

Le cas échéant, une soupape d'équilibrage formée dans la paroi intérieure entre le troisième sas et le deuxième sas, en particulier dans l'orifice de transmission de fluide correspondant, constitue alors une deuxième soupape d'équilibrage.

De manière générale, l'au moins un orifice ménagé dans au moins une partie de la paroi intérieure, et/ou une soupape (aussi désignée micro-soupape) pouvant optionnellement équiper un tel orifice, sont dimensionnés en fonction de la configuration de l'organe tampon, ou plus généralement du système de transfert de fluide, et des gestions de pression de fluide souhaitée dans l'organe tampon.

Il peut donc y avoir plusieurs orifices, et/ou plusieurs soupapes, disposées dans un sens ou un autre en fonction des pressions souhaitées.

Un réseau de soupapes peut donc être configuré, à souhait, pour gérer une surpression utile pour énergiser des joints et pour leur maintenance.

En fonction de la situation voulue, chaque soupape peut donc être disposée, dans un sens ou un autre, et dimensionnée, pour contrôler les différents transferts de pression dans l'au moins un sas de l'organe tampon.

Par exemple, la deuxième soupape d'équilibrage peut être montée en sens inverse par rapport à la première soupape d'équilibrage.

Un montage de soupapes d'équilibrage en sens inverses permet éventuellement, par exemple, de générer une surpression d'une valeur du tarage de la soupape de sécurité dans le premier sas tout en autorisant une maintenance ou une mise en surpression manuelle des deux autres sas, par exemple avec une injection de gaz comme décrit ci-après.

Dans un exemple de réalisation, l'organe tampon est annulaire et entoure le conduit de transfert de liquide.

L'organe tampon contribue ainsi à l'isolation thermique du conduit de transfert de liquide et à la collecte des éventuelles fuites qui peuvent en provenir.

Un autre avantage d'un système de transfert de fluide ayant au moins un organe tampon est de pouvoir faire intervenir la gravité.

Ainsi, une contrepression gazeuse contribue à maintenir le liquide dans son circuit plus que l'étanchéité produite par un organe d'étanchéité dynamique.

Dans un exemple de mise en œuvre, le système de transfert de fluide est configuré pour qu'un écoulement de liquide dans le conduit de transfert de liquide soit selon une première direction, par exemple descendant, i.e. selon la gravité, et pour qu'un écoulement de gaz dans le conduit de transfert de gaz soit selon la première direction également.

Dans un exemple de mise en œuvre, le système de transfert de fluide est configuré pour qu'un écoulement de liquide dans le conduit de transfert de liquide soit selon une première direction, par exemple descendant, i.e. selon la gravité, et pour qu'un écoulement de gaz dans le conduit de transfert de gaz soit selon une deuxième direction, opposée à la première, par exemple ascendant.

Dans un exemple de mise en œuvre particulier, le système de transfert de fluide est configuré pour qu'un écoulement de liquide soit descendant, i.e. selon la gravité, et pour qu'un écoulement de gaz soit ascendant, i.e. contraire à l'écoulement de liquide. Par exemple, l'entrée de fluide de l'organe tampon est décalée par rapport à la sortie de fluide par rapport à un axe longitudinal (X) du conduit de transfert de liquide.

L'axe longitudinal (X) du conduit de transfert de liquide correspond ici à une ligne moyenne d'écoulement de fluide dans le conduit de transfert de liquide.

Dans un cas de conduit cylindrique à section circulaire, l'axe longitudinal (X) est un axe de révolution dudit conduit.

Dans un exemple de réalisation, au moins une partie de l'entrée de fluide dans l'organe tampon est disposée à une altitude plus basse qu'une altitude d'au moins une partie de la sortie de fluide pour assurer un niveau bas pour du liquide et un niveau haut pour du gaz.

Dans un exemple de réalisation, le système de transfert de fluide comporte une gaine isolante.

Par exemple, la gaine isolante entoure au moins un tronçon du conduit de transfert de gaz.

La gaine isolante peut entourer au moins un tronçon du conduit de transfert de liquide, par exemple un tronçon juxtaposé à l'organe tampon.

Par exemple, la gaine isolante comporte une structure à double paroi.

Par exemple, la gaine isolante comporte un revêtement isolant.

L'isolation de la structure externe est par exemple assurée à des endroits critiques par la présence d'une double paroi qui peut inclure tout type de matériau isolant et/ou être mise sous vide à l'intérieur de la double paroi.

Dans un exemple de réalisation, le système de transfert de fluide comporte un système de pressurisation qui comporte un gaz, le système de transfert de fluide étant configuré pour injecter du gaz du système de pressurisation dans le volume interne de l'organe tampon.

Le gaz du système de pressurisation est par exemple un gaz neutre.

Par exemple, le gaz comporte au moins un gaz parmi : Azote, Argon, Hélium, ou Méthane, ou tout mélange d'entre eux.

Par exemple, le gaz du système de pressurisation est configuré pour être dans un état gazeux à une température supérieure ou égale à environ -160°C.

Par exemple, le gaz du système de pressurisation est choisi pour avoir un point de rosée inférieur à -160°C.

Par exemple, le système de pressurisation comporte une bouteille de gaz sec sous pression.

Par exemple, le système de transfert de fluide peut comporter un régulateur de pression configuré pour réguler une pression dans l'organe tampon.

En régulant la pression dans l'organe tampon, un volume de gaz dans l'organe tampon va se pressuriser en fonction d'une pression préétablie afin de maintenir cette pression dans l'organe tampon. En injectant un volume de gaz suffisant dans l'organe tampon, une pression va s'établir et s'opposer à une fuite éventuelle de liquide.

Par exemple pour une pression déterminée de 25 bar dans l'organe tampon, et une pression dans le conduit de transfert de liquide variant entre 10 bar et 20 bar, une pression de tarage de la soupape de sécurité est d'environ 5 bar, ainsi qu'au moins celle d'une soupape d'équilibrage le cas échéant.

Ainsi, l'organe tampon permet de limiter voire d'empêcher des fuites de liquide hors du conduit de transfert de liquide.

Dans un exemple de réalisation, l'organe tampon comporte un port d'injection de gaz configuré pour injecter un gaz, en particulier un gaz neutre et sec, sous pression, dans l'organe tampon, par exemple dans au moins un sas de l'organe tampon.

Dans un exemple de réalisation, le système de transfert de fluide comporte au moins un collecteur configuré pour injecter du gaz dans l'organe tampon via le port d'injection de gaz, dit collecteur de déversement.

Le collecteur de déversement met ainsi en relation l'organe tampon avec le système de pressurisation, lequel peut inclure par exemple une bouteille de gaz sec sous pression. Un tel système de pressurisation (éventuellement manuel), avec un collecteur de déversement, permet de contrôler des débits de fuite, et surtout purger et/ou drainer des résidus liquides et/ou solides qui peuvent avoir été embarqués, malgré au moins une purification du fluide.

Dans un tel système de transfert de fluide, il est donc possible de nettoyer au moins une partie du système de transfert de fluide, par exemple l'organe tampon, par des purges, éventuellement manoeuvrées depuis l'extérieur du système, sur les surfaces d'étanchéité et/ou les surfaces de frottement : par exemple des paliers ou des joints suivant la technique utilisée.

Ceci contribue à une meilleure sécurité du système de transfert de fluide car pressuriser avec un gaz neutre peut se faire sans avoir à démonter le système.

En outre, limiter un encrassement du système de transfert de fluide permet de réduire son usure et donc produire une meilleure fiabilité de fonctionnement.

De plus, un tel système de transfert de fluide permet de surveiller une pression de circulation du liquide et contribue à une qualité de son étanchéité.

Selon la nature du fluide, ceci permet d'éviter une pollution atmosphérique et/ou une éventuelle inflammation du gaz à l'air libre.

De plus, ceci limite un phénomène de cryopompage, qui peut être à risques, dans lesquels de l'eau peut givrer et ainsi provoquer une abrasion de joints, du bruit, et/ou aussi former des clathrates selon le fluide opéré, notamment des clathrates de méthane le cas échéant, c'est-à-dire des composés dans lesquels des molécules de méthane sont emprisonnées dans un maillage de molécules d'eau. De tels clathrates forment une espèce de cire qui contribue à l'usure du système et engendre incidemment des fuites non désirées. Il est donc préférable de pouvoir éviter une formation de clathrates.

L'utilisation d'une pressurisation avec un gaz neutre et sec telle que décrite précédemment, même pendant le fonctionnement du système, permet ainsi de rendre inerte, tester, purger, drainer et sécher au moins une partie de l'organe tampon.

Dans un autre exemple de réalisation, l'organe tampon peut être pressurisé par l'écoulement de gaz.

Dans un tel exemple de réalisation, le collecteur de déversement est alors relié fluidiquement au conduit de transfert de gaz d'un part, et au port d'injection de gaz de l'organe tampon d'autre part.

Selon un autre exemple, en alternative ou complément, le système de transfert de fluide peut comporter un clapet dimensionné en fonction d'une pression souhaitée et/ou commandé en fonction d'une pression cible.

Selon une autre option intéressante, le système de transfert de fluide est configuré pour compenser une variation de longueur du conduit de transfert de liquide.

La variation de longueur du conduit de transfert de liquide est due à une déformation (dilatation ou contraction) axiale, i.e. selon une longueur du conduit.

A titre illustratif, en fonctionnement avec du GNL, le fluide dans le conduit de transfert de liquide est de préférence maintenu à une température comprise entre -160°C et - 140°C, donc le conduit se trouve à une température comprise entre environ -160°C et - 140°C. Or, lorsque l'écoulement de fluide est initié dans le conduit, le conduit de transfert de liquide est à température ambiante au début de l'opération. Du fait du refroidissement important, le conduit de transfert de liquide se contracte, et donc réduit de longueur.

Cependant, le conduit de transfert de gaz n'est pas soumis à une même contraction. Par conséquent, le conduit de transfert de liquide réduit de longueur par rapport au conduit de transfert de gaz qui l'entoure.

Immobiliser le conduit de transfert de liquide par rapport au conduit de transfert de gaz engendrerait des contraintes trop importantes pour garantir une intégrité des conduits, et/ou impliquerait des coûts très élevés.

Il est donc intéressant que le système de transfert de fluide soit configuré pour compenser de telles variations de longueur.

Dans un exemple de réalisation, le conduit de transfert de liquide comporte un tronçon incident muni d'un embout, et un tronçon récepteur, formant une manchette de protection, dans lequel est inséré l'embout.

Ainsi, en fonction de la déformation du conduit de transfert de liquide, l'embout est enfoncé plus ou moins profondément dans le tronçon récepteur.

Dans un exemple de réalisation, l'organe tampon est configuré pour glisser par rapport à au moins l'un parmi le tronçon incident et le tronçon récepteur, i.e. coulisser par rapport au tronçon incident et/ou le tronçon récepteur.

L'organe tampon agit alors comme une bague qui peut se déplacer (par exemple monter ou descendre) par rapport au tronçon incident, tout en étant étanche en rotation.

Optionnellement, l'organe tampon est attaché, fixé, à au plus l'un parmi le tronçon incident et le tronçon récepteur.

Ainsi, l'organe tampon est configuré pour compenser une déformation du conduit de transfert de liquide, notamment en réalisant une jonction entre le tronçon incident et le tronçon récepteur, par un glissement longitudinal.

Ceci peut simplifier la conception de conduit, par exemple un gazoduc, de grande longueur.

Toutefois, selon un autre mode de réalisation, l'organe tampon pourrait être une bague flottante axialement.

Dans un mode de mise en œuvre, le système décrit ici peut produire des fuites inverses, c'est-à-dire où du fluide gazeux peut se reliquéfier. Un tel système est alors configuré pour supporter une surpression dans les deux sens.

Les entrées et sorties décrites ici ont alors leurs fonctions inversées. Par exemple, l'entrée de fluide configurée pour introduire du fluide, depuis le conduit de transfert de liquide, dans l'organe tampon, sert alors à extraire du fluide depuis l'organe tampon vers le conduit de transfert de liquide. Idem, la sortie de fluide configurée pour extraire du fluide depuis l'organe tampon vers le conduit de transfert de gaz, sert alors à introduire du fluide, depuis le conduit de transfert de gaz, dans l'organe tampon.

Un tel système de transfert de fluide comportant deux conduits concentriques permet par exemple d'offrir les possibilités suivantes :
- un transfert de gaz pour un chargement ou déchargement d'un produit gazeux ;
- une protection (inertage) d'une cuve, en amont ou en aval du système ;
- une isolation (« pipe in pipe ») ;
- une protection (dite « boil off protection » en anglais), i.e. un gaz est appliqué en surface d'un gaz liquéfié et empêche ainsi sa liquéfaction en créant un ciel gazeux ;
- un contrôle de fuite : en appliquant un vide permanent dans le conduit de transfert de gaz, il est possible de contrôler et/ou analyser une introduction éventuelle de gaz dans l'organe tampon et ainsi vérifier s'il y a une fuite dans le système qui pourrait provenir du conduit de transfert de liquide.

L'invention a aussi pour objet, selon un autre aspect, un dispositif joint tournant qui comporte un système de transfert de fluide comportant tout ou partie des caractéristiques décrites précédemment.

Par exemple, le dispositif joint tournant comporte une première partie annulaire, dite fixe, et une deuxième partie annulaire mobile en rotation autour d'un axe de rotation X et par rapport à ladite première partie annulaire fixe.

Le dispositif joint tournant présente généralement un espace interne défini par une surface interne de la première partie annulaire fixe.

Le dispositif joint tournant comporte un conduit de transfert qui entre par la première partie annulaire fixe du dispositif joint tournant et débouche hors du dispositif joint tournant par un raccord de sortie relié à la deuxième partie annulaire mobile.

Un écoulement traverse ainsi le dispositif joint tournant en entrant dans la première partie annulaire fixe par le conduit de transfert et en sortant par la deuxième partie annulaire mobile par le raccord de sortie.

Ici, le conduit de transfert qui entre dans le dispositif joint tournant comporte au moins le conduit de transfert de gaz du système de transfert de fluide, formant une entrée de gaz dans le dispositif joint tournant, et la deuxième partie mobile comporte le raccord de sortie qui forme une sortie de gaz du dispositif joint tournant.

Dans un exemple de réalisation, le conduit de transfert de liquide du système de transfert de fluide est disposé dans l'espace interne du dispositif joint tournant.

Un tel dispositif joint tournant rend ainsi possible simultanément le transfert de liquide et le transfert de gaz en assurant la rotation selon l'axe vertical (X) et l'étanchéité desdits circuits.

Dans un exemple de réalisation dans lequel le conduit de transfert de liquide comporte un tronçon incident et un tronçon récepteur, l'un du tronçon incident ou du tronçon récepteur peut être fixé à la deuxième partie annulaire mobile et/ou l'autre du tronçon incident ou du tronçon récepteur peut être fixé à la première partie annulaire fixe.

Par exemple, la deuxième partie annulaire est mobile en rotation par rapport à la première partie annulaire par l'intermédiaire d'un organe d'articulation, au moins partiellement interposé entre la première partie annulaire et la deuxième partie annulaire.

Par exemple, l'organe d'articulation comporte un organe à roulements.

Dans un exemple de réalisation, le dispositif joint tournant comporte un port d'injection de fluide configuré pour injecter un fluide dans l'organe d'articulation.

Dans un exemple de réalisation, le dispositif joint tournant comporte au moins un collecteur configuré pour injecter du fluide dans l'organe d'articulation via le port d'injection de fluide.

De manière analogue, un fluide peut être injecté sur une barrière qui se trouve à l'extérieur de l'organe d'articulation, qui englobe l'organe d'articulation, et la barrière peut être pressurisée, par exemple à une pression de 40 bar ou 50 bar, éventuellement grâce à un collecteur, et qui va par exemple empêcher de l'eau de mer d'entrer (embruns, pluie, vagues si système flottant comme une bouée, etc).

Selon une autre option intéressante, le collecteur peut être un collecteur d'huile ou autre lubrifiant (comme par exemple des glycols ou éthers de pétrole qui permettent de lubrifier à -160°C), l'huile ou autre lubrifiant étant choisis pour ne pas figer à la température de service (environ -160°C maximum).

Selon un exemple de réalisation alternatif si un organe à roulements est trop compliqué à lubrifier, l'organe d'articulation peut comporter au moins un patin de friction.

Dans un exemple de réalisation, le dispositif joint tournant comporte une gaine isolante.

Par exemple, la gaine isolante entoure au moins en partie la première partie annulaire fixe et/ou la deuxième partie annulaire mobile.

Par exemple, la gaine isolante comporte une structure à double paroi.

Par exemple, la gaine isolante comporte un revêtement isolant.

L'isolation de la structure externe est par exemple assurée à des endroits considérés comme critiques par la présence d'une double paroi qui peut inclure tout type de matériau isolant et/ou être mise sous vide à l'intérieur de la double paroi.

Un but d'une telle isolation est de limiter des échanges thermiques qui peuvent refroidir l'organe d'articulation ou favoriser un réchauffement du passage liquide.

L'invention a aussi pour objet, selon encore un autre aspect, un empilement de dispositifs joint tournant comportant au moins deux dispositifs joint tournant, au moins un premier des dispositifs joint tournant de l'empilement de dispositifs joint tournant étant tel que décrit précédemment.

L'invention a encore pour objet, selon encore un autre aspect, une installation d'exploitation de fluide qui comporte au moins :
- une unité de liquéfaction,
- une entité de stockage et/ou de transport,
- un premier dispositif joint tournant comportant un système de transfert de fluide tel que décrit précédemment, le premier dispositif joint tournant étant relié par le raccord de sortie à l'unité de liquéfaction et par le conduit de transfert de gaz à l'entité de stockage et/ou de transport, le conduit de transfert de liquide du système de transfert de fluide reliant l'unité de liquéfaction à l'entité de stockage et/ou de transport, et
- au moins un deuxième dispositif joint tournant, qui comporte un conduit d'entrée dans le deuxième dispositif joint tournant qui est relié à un conduit d'un réseau de canalisations subaquatiques pour extraire du gaz naturel, et un raccord de sortie qui est relié à l'unité de liquéfaction.

Par exemple, le deuxième dispositif joint tournant peut être un dispositif joint tournant haute pression haute température (noté HPHTS).

Dans un exemple de réalisation, l'installation comporte un empilement de dispositifs joint tournant comportant au moins deux dispositifs joint tournant, l'empilement de dispositifs joint tournant comportant au moins le premier dispositif joint tournant et le deuxième dispositif joint tournant.

Dans un exemple de réalisation, l'installation comporte en outre un navire, et au moins l'un parmi le premier dispositif joint tournant ou le deuxième dispositif joint tournant est disposé sur le navire.

### Brève description des figures

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
La figure 1 représente schématiquement et partiellement une installation d'exploitation de fluides sur une plateforme offshore, pourvue d'un navire, d'une tourelle d'amarrage, d'un réseau de canalisations subaquatiques permettant une communication fluidique pour le transfert du fluide entre le fond marin et le navire, et d'au moins un dispositif joint tournant assurant l'étanchéité entre le navire et la tourelle et l'intégrité du transfert de fluides ;
La figure 2 est une vue schématique de dessus d'un dispositif joint tournant, tel qu'utilisé par exemple dans l'installation illustrée sur la figure 1 ;
La figure 3 représente un système de transfert de fluide selon un premier mode de réalisation ;
La figure 4 représente le système de la figure 3 partiellement éclaté ;
La figure 5 représente un système de transfert de fluide selon un deuxième mode de réalisation ;
La figure 6 représente un système de transfert de fluide selon un troisième mode de réalisation ;
La figure 7 représente un système de transfert de fluide selon un quatrième mode de réalisation ;
La figure 8 représente un système de transfert de fluide selon un cinquième mode de réalisation ;
La figure 9 représente un système de transfert de fluide selon un sixième mode de réalisation formant un joint de dilatation coaxial ;
La figure 10 représente un système de transfert de fluide selon un septième mode de réalisation formant un joint de dilatation coaxial selon une première variante ;
La figure 11 représente un système de transfert de fluide selon un huitième mode de réalisation formant un joint de dilatation coaxial selon une deuxième variante ;
La figure 12 représente un système de transfert de fluide selon un neuvième mode de réalisation ;
La figure 13 représente le système de la figure 12 partiellement éclaté ; et
La figure 14 illustre des variantes de réalisation du conduit de transfert de liquide en fonction d'un sens d'écoulement de liquide dans le conduit de transfert de liquide.

### Description détaillée

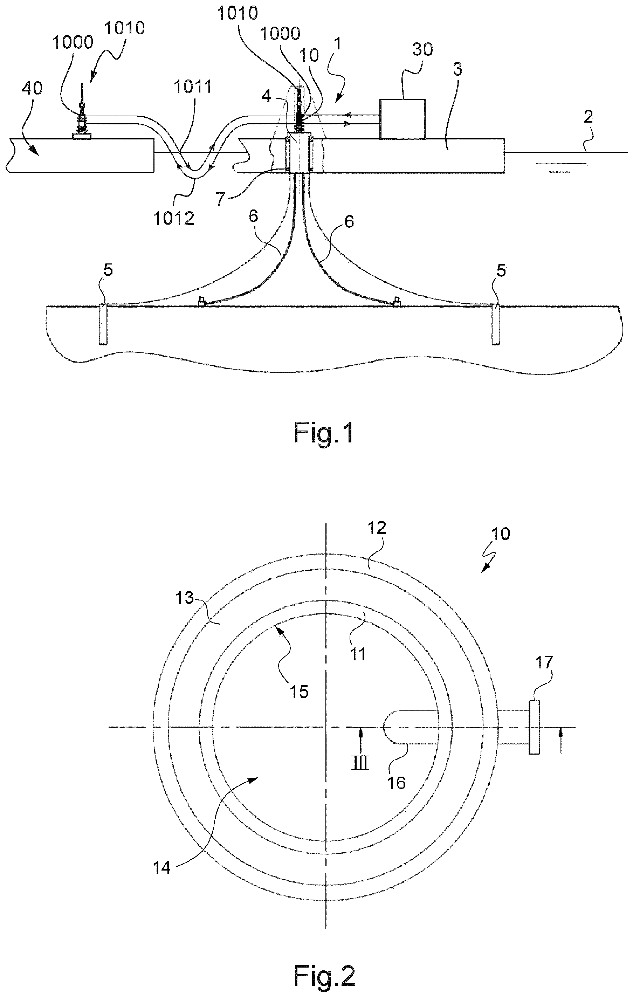

La figure 1 illustre une installation d'exploitation de fluides 1 sur une plateforme offshore, permettant l'exploitation de champs d'hydrocarbures en mer 2.

Cette installation 1, aussi appelée unité flottante de production, de stockage et de déchargement (FPSO), peut être pourvue d'un navire 3 qui est mobile, du fait de son environnement formé par la mer 2, et d'une tourelle d'amarrage 4 qui est géostationnaire et autour de laquelle le navire 3 est mobile.

La tourelle d'amarrage 4 peut par exemple être assujettie mécaniquement au fond de la mer 2 via des ancres sous-marines 5.

Le navire 3 peut être mobile vis-à-vis de la tourelle d'amarrage 4 par le biais d'un mécanisme à roulements 7.

L'installation 1 peut être pourvue de conduits 6 qui forment un réseau de canalisations subaquatiques permettant une communication fluidique pour un transfert de fluide (par exemple : eau, méthanol, détergents, ...) entre la tourelle d'amarrage 4 et le fond de la mer.

Le fluide circulant dans les conduits 6 peut aussi provenir d'un sous-sol de la mer 2. Le fluide peut ensuite être traité et purifié avant que le gaz ne puisse être liquéfié. Pour cela, l'installation d'exploitation de fluides 1 comporte une unité de liquéfaction 30, laquelle peut être située sur le navire 3 comme illustré ici, ou y être adjointe sur une unité flottante amarrée à couple par exemple.

Le fluide liquéfié peut ensuite être poussé vers une entité de stockage et/ou de transport 40, par exemple via une bouée d'amarrage.

Une entité de stockage et/ou de transport 40 est par exemple un transporteur de gaz d'exportation (par exemple un méthanier navette), qui peut être amarré en tandem, ou par une bouée d'amarrage, pour ensuite transférer le fluide vers une raffinerie à terre, voire même directement un site particulier, à terre.

Par exemple, l'entité de stockage et/ou de transport 40 peut être :
- Soit amarrée à couple (en tandem) ou en ligne (dit « piggy back ») et connectée par des flexibles flottants 1012 pour le GNL et des flexibles flottants 1011 pour le transfert de gaz ;
- Soit amarrée et connectée à une bouée (non illustrée) par des flexibles, coaxiaux ou non, flottants ou sous-marins, qui peuvent par exemple être soit flottant entre deux eaux, soit ensouillés ;

Selon un autre exemple, le navire peut aussi alimenter une raffinerie à terre voire même directement un site particulier (non illustré).

L'installation 1 comporte un dispositif joint tournant 10 assurant :
- l'étanchéité entre le navire 3 et la tourelle d'amarrage 4, et
- l'intégrité du transfert de fluides.

Le dispositif joint tournant 10 peut être formé d'un joint tournant (« *swivel joint* » en terminologie anglo-saxonne) ou être disposé dans un empilement de tels joints.

Au moins un dispositif joint tournant 10, par exemple un dispositif joint tournant HPHTS, peut donc se trouver sur le navire 3 afin d'extraire le GN et l'envoyer vers l'unité de liquéfaction 30, tandis qu'au moins un autre dispositif joint tournant peut être disposé pour transférer le GNL depuis l'unité de liquéfaction 30 vers l'entité de stockage et/ou de transport 40, et pour réacheminer un gaz vers l'unité de liquéfaction 30.

L'installation 1 peut alors notamment comporter au moins un empilement 1010 de dispositifs joint tournant comportant au moins deux dispositifs joint tournant.

Ainsi qu'illustré sur la figure 2, un tel dispositif joint tournant 10, par exemple HPHTS, est globalement annulaire et comporte une première partie annulaire 11, dite fixe, qui est généralement configurée pour être assujettie à la tourelle d'amarrage 4, et/ou aux ancres d'amarrage 5, ainsi qu'une deuxième partie annulaire 12, dite mobile, qui est configurée pour être assujettie au navire 3.

Dans l'exemple décrit ici, la deuxième partie annulaire 12 est mobile en rotation par rapport à la première partie annulaire 11, par l'intermédiaire d'un organe à roulements 13 au moins partiellement interposé entre la première partie annulaire 11 et la deuxième partie annulaire 12.

L'organe à roulements est par exemple protégé par des joints.

Le dispositif joint tournant 10 présente un espace interne 14 défini ici par une surface interne 15 de la première partie annulaire 11.

Le dispositif joint tournant 10 comporte en outre un conduit de transfert 16 raccordé, directement ou indirectement, à au moins un des conduits subaquatiques 6.

Le conduit de transfert 16 entre dans la première partie annulaire 11 par l'espace interne 14 et débouche hors du dispositif joint tournant 10 par un raccord de sortie 17. Le raccord de sortie 17 est par exemple relié à une unité de traitement et/ou de liquéfaction (non représenté) afin de séparer puis liquéfier le gaz et ensuite transférer le gaz liquéfié vers un tanker navette ou une unité de stockage à terre.

Un écoulement traverse ainsi le dispositif joint tournant 10 en entrant dans la première partie annulaire fixe 11 par le conduit de transfert et en sortant par la deuxième partie annulaire mobile 12 par le raccord de sortie.

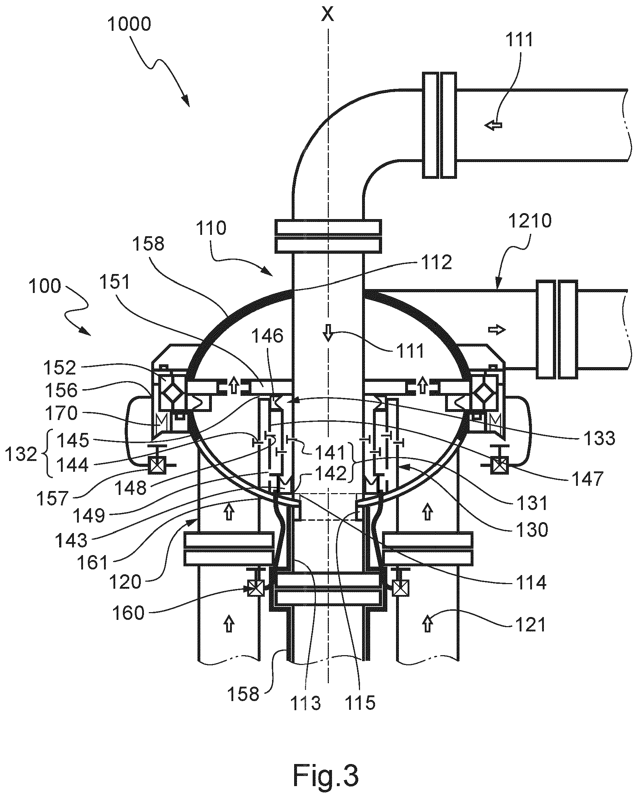

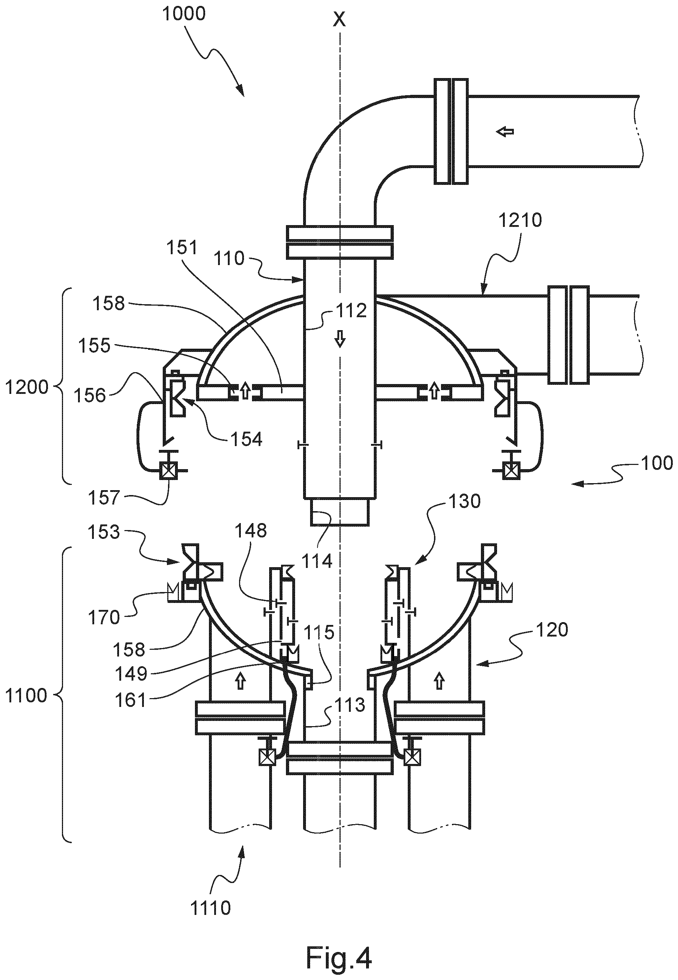

La figure 3 représente un système de transfert de fluide 100 selon un premier mode de réalisation de l'invention. La figure 4 représente le système de la figure 3 partiellement éclaté.

Le système de transfert de fluide 100 comporte un conduit de transfert de liquide 110, configuré pour acheminer un gaz liquéfié (GL).

Le conduit de transfert de liquide 110 est ici un conduit à section circulaire.

Le conduit à section circulaire comporte alors une paroi cylindrique délimitant un volume interne du conduit dans lequel peut s'écouler un écoulement de fluide, comme par exemple un écoulement de gaz liquéfié schématisé par la flèche 111.

Le conduit de transfert de liquide 110 comporte ici deux tronçons, dont un tronçon incident 112 et un tronçon récepteur 113.

Le tronçon incident 112 et le tronçon récepteur 113 sont en partie imbriqués l'un dans l'autre, permettant ainsi une variation de longueur du conduit de transfert de liquide 110, une variation de longueur pouvant être induite en fonction de la température (dilatation) et de la pression (effet de fond).

La longueur représente ici une dimension selon un axe longitudinal X, illustré figure 3. L'axe longitudinal (X) correspond ici à une ligne moyenne d'écoulement de fluide dans le conduit de transfert de liquide 110. Dans un cas de conduit cylindrique à section circulaire, il s'agit d'un axe de révolution du conduit.

Comme mieux visible figure 4 par exemple, le tronçon incident 112 comporte un embout 114, formant une partie de section amoindrie du tronçon incident 112, configuré pour s'insérer dans le tronçon récepteur 113, lequel forme ainsi une manchette de protection.

Une telle manchette de protection peut par exemple être configurée pour protéger des joints et/ou des paliers contre une érosion qui peut être due à des turbulences d'un mélange de bulles de gaz et de liquide dans le conduit de transfert de liquide 110. Cette manchette peut être par exemple guidée par un palier 115 disposé entre le tronçon récepteur 113 et l'embout 114.

En fonction de la déformation du conduit de transfert de liquide, l'embout est enfoncé plus ou moins profondément dans le tronçon récepteur 113.

Le conduit de transfert de liquide 110 est ainsi configuré pour prendre une configuration rétractée dans lequel au moins une partie de l'embout 114 est insérée dans le tronçon récepteur 113 et le conduit de transfert de liquide 110 a alors une première longueur, et une configuration déployée dans laquelle la partie de l'embout est hors du tronçon récepteur 113 et le conduit de transfert de liquide 110 a alors une deuxième longueur, plus grande que la première longueur.

En configuration rétractée, au moins une moitié d'une longueur de l'embout 114 est de préférence engagé dans le tronçon récepteur 113, considérant par exemple une température de travail dans des conditions des plus difficiles, comme par exemple environ 25 bar à -100°C.

Par ailleurs, le tronçon incident 112 peut tourner par rapport au tronçon récepteur 113, par exemple ici selon l'axe X.

Le système de transfert de fluide 100 comporte également un conduit de transfert de gaz 120.

Le conduit de transfert de gaz 120 est notamment configuré pour acheminer une partie évaporée du gaz liquéfié, notamment vers l'unité de liquéfaction.

Le conduit de transfert de gaz 120 est ici un conduit à section annulaire.

Autrement dit, le conduit à section annulaire comporte une paroi cylindrique interne et une paroi cylindrique externe qui entoure la paroi cylindrique interne, et un fluide peut alors s'écouler dans le conduit entre la paroi cylindrique interne et la paroi cylindrique externe.

Sur la figure 3, un écoulement de gaz est représenté par la flèche 121.

L'écoulement de gaz est ici schématisé en sens opposé à celui de l'écoulement de liquide schématisé par la flèche 111. Cependant, l'écoulement de gaz pourrait se faire dans le même sens que celui du liquide, dépendant d'un contexte et/ou d'une application souhaitée.

Dans le présent exemple de réalisation, le conduit de transfert de gaz 120 entoure le conduit de transfert de liquide 110.

En outre, le conduit de transfert de liquide 110 et le conduit de transfert de gaz 120 sont concentriques.

Le système de transfert de fluide 100 comporte en outre un organe tampon 130. L'organe tampon 130 est notamment configuré pour transférer une partie évaporée de gaz liquéfié circulant dans le conduit de transfert de liquide 110, depuis le conduit de transfert de liquide 110 vers le conduit de transfert de gaz 120.

L'organe tampon 130 permet ainsi de séparer du gaz, issu de fuites de liquide qui pourrait s'être vaporisé à l'intérieur du conduit de transfert de liquide 110, et renvoyer ce gaz à une unité de liquéfaction par le conduit de transfert de gaz 120.

L'organe tampon 130 est ici disposé entre le conduit de transfert de liquide 110 et le conduit de transfert de gaz 120 et entoure au moins en partie le conduit de transfert de liquide 110.

Autrement dit, l'organe tampon 130 est ici annulaire et entoure le conduit de transfert de liquide 110.

L'organe tampon 130 contribue ainsi à une isolation thermique du conduit de transfert de liquide 110 et à la collecte des éventuelles fuites qui peuvent en provenir.

Le système de transfert de fluide 100 permet ainsi de contribuer à une isolation thermique du conduit de transfert de liquide 110 formant une voie centrale dédiée à du gaz liquéfié, en utilisant le conduit de transfert de gaz 120 pour l'entourer, et permet de séparer les deux flux (de liquide et de gaz) par un volume intermédiaire constitué par l'organe tampon 130.

Le conduit de transfert de gaz 120 gaine le conduit de transfert de liquide 110 et forme une barrière thermique et un amortisseur de pression différentielle gaz/liquide.

Du gaz évaporé à partir du liquide peut circuler dans l'organe tampon 130 et s'échapper dans le conduit de transfert de gaz 120.

Le conduit de transfert de gaz 120 est alors configuré pour récupérer et faire circuler une partie, ou fraction, évaporée du liquide.

L'organe tampon 130 comporte d'une part une entrée de fluide 131 et d'autre part une sortie de fluide 132.

L'entrée de fluide 131 est configurée pour introduire du fluide dans l'organe tampon 130, depuis le conduit de transfert de liquide 110.

Par exemple, l'entrée de fluide 131 peut comporter au moins un orifice formé dans la paroi du conduit de transfert de liquide 110 et débouchant dans l'organe tampon 130. L'entrée de fluide 131 peut notamment comporter plusieurs orifices disposés autour du conduit de transfert de liquide 110.

Dans le présent exemple de réalisation, l'entrée de fluide 131 comporte au moins une soupape de sécurité 141.

Elle peut notamment comporter plusieurs soupapes de sécurité disposées autour du conduit de transfert de liquide 110.

La soupape de sécurité 141 est par exemple configurée pour équilibrer une surpression entre le conduit de transfert de liquide 110 et l'organe tampon 130.

Ainsi, toute surpression dans le conduit de transfert de liquide 110 est libérée dans l'organe tampon 130 par au moins une soupape de sécurité 141 calibrée en conséquence.

Ici, la soupape de sécurité 141 est disposée dans la paroi du conduit de transfert de liquide 110, en particulier dans le présent exemple de réalisation, dans le tronçon incident 112, et par exemple dans un orifice de l'entrée de fluide 131.

En alternative ou complément, comme illustré ici, l'entrée de fluide 131 peut également comporter un passage de fuite 142, par exemple un passage contournant un organe d'étanchéité dynamique 143 décrit ultérieurement.

Un passage de fuite désigne ici un interstice formé par un contact entre des pièces.

Dans le présent exemple, comme mieux visible sur la figure 4, lorsque le tronçon incident 112 est inséré dans le tronçon récepteur 113, un contact entre l'embout 114, le palier 115 et le tronçon récepteur 113 peut laisser passer une fuite de fluide.

Pour néanmoins maitriser une telle fuite, le système de transfert de fluide 100 comporte par exemple un organe d'étanchéité dynamique 143.

Dans cet exemple, l'organe d'étanchéité dynamique 143 comporte un joint piston. L'organe d'étanchéité dynamique 143 est par exemple ici disposé dans l'organe tampon 130, et par exemple autour d'une jonction entre le tronçon incident 112 et du tronçon récepteur 113, par exemple en regard d'un interstice entre l'organe tampon 130 et le tronçon incident 112.

La sortie de fluide 132 est configurée pour extraire du fluide depuis l'organe tampon 130 vers le conduit de transfert de gaz 120.

Par exemple, la sortie de fluide 132 peut comporter au moins un orifice formé dans la paroi du conduit de transfert de gaz 120, notamment la paroi cylindrique interne, et débouchant dans l'organe tampon 130.

Elle peut notamment comporter plusieurs orifices disposés autour du conduit de transfert de gaz 120, notamment de la paroi cylindrique interne.

Dans le présent exemple de réalisation, la sortie de fluide 132 comporte au moins une soupape d'échappement 144.

Elle peut notamment comporter plusieurs soupapes d'échappement disposées autour du conduit de transfert de gaz 120, notamment de la paroi cylindrique interne.

La soupape d'échappement 144 est par exemple configurée pour équilibrer une surpression entre l'organe tampon 130 et le conduit de transfert de gaz 120.

Ainsi, toute surpression dans l'organe tampon 130 est libérée dans le conduit de transfert de gaz 120 par au moins une soupape d'échappement 144 calibrée en conséquence.

Ici, la soupape d'échappement 144 est disposée dans la paroi cylindrique interne du conduit de transfert de gaz 120, notamment dans un orifice de la sortie de fluide 132. En alternative ou complément, comme illustré ici, la sortie de fluide 132 peut également comporter un passage de fuite 145, par exemple un passage contournant un organe d'étanchéité dynamique 146 décrit ultérieurement.

Dans le présent exemple, comme mieux visible sur la figure 4, le système de transfert de fluide 100 comporte une cloison de séparation 151 contre laquelle l'organe tampon 130 est amené en butée.

Un contact entre la cloison de séparation 151 et l'organe tampon 130 peut laisser passer une fuite de fluide.

Pour limiter une telle fuite, le système de transfert de fluide 100 comporte par exemple un organe d'étanchéité dynamique 146, par exemple ici un joint facial.

L'organe d'étanchéité dynamique 146 est par exemple ici disposé dans l'organe tampon 130, et contre la cloison de séparation 151.

En pratique, le système de transfert de fluide 100 est de préférence configuré pour qu'un écoulement de liquide soit descendant, i.e. selon la gravité, comme schématisé par la flèche 111, et pour qu'un écoulement de gaz soit ascendant, i.e. contraire à l'écoulement de fluide, comme schématisé par la flèche 121.

Il est alors intéressant que l'entrée de fluide 131 de l'organe tampon soit décalée par rapport à la sortie de fluide 132 selon l'axe longitudinal (X) du conduit de transfert de liquide 110.

Comme schématisé ici, au moins une partie de l'entrée de fluide 131 dans l'organe tampon (ici le passage de fuite 142) est disposée à une altitude plus basse qu'une altitude d'au moins une partie de la sortie de fluide 132 (ici le passage de fuite 145) pour assurer un niveau inférieur pour du liquide et un niveau supérieur pour du gaz. L'organe tampon 130 comporte ici un volume interne 133 formant au moins un sas entre le conduit de transfert de liquide 110 et le conduit de transfert de gaz 120. Dans le présent exemple de réalisation, l'organe tampon 130 comporte au moins une paroi intérieure 147 formant un labyrinthe pour un écoulement fluidique dans l'organe tampon.

Ici, la paroi intérieure 147 divise le volume interne 133 de l'organe tampon 130 en au moins deux sas, et même ici trois sas, l'entrée de fluide 131 étant disposée dans un premier des sas, et la sortie de fluide 132 étant disposée dans un deuxième des sas ; ici un troisième sas étant formé entre le premier sas et le deuxième sas.

Par exemple, la paroi intérieure 147 est configurée pour permettre un passage de fluide du premier sas vers le deuxième sas.

Dans le présent exemple de réalisation, la paroi intérieure 147 comporte au moins une soupape d'équilibrage 148 disposée dans un orifice, et un orifice sans soupape 149. La soupape d'équilibrage 148 est par exemple configurée pour équilibrer une pression entre deux des sas de l'organe tampon 130.

La soupape de sécurité 141 est par exemple configurée pour limiter à 5 bar une surpression dans le conduit de transfert de liquide 110 par rapport à l'organe tampon 130. Par exemple, si des organes d'étanchéité dynamique 143, 146 sont étanches et que du liquide est passé dans l'organe tampon, ce liquide se vaporiserait et augmenterait la pression dans l'organe tampon sans toutefois excéder un tarage d'une soupape d'équilibrage qui relâcherait l'excès de pression de l'organe tampon vers le conduit de transfert de liquide 110.

Dans le présent exemple de réalisation, la soupape d'équilibrage peut être tarées à quelques bars et montée en sens inverse de la soupape de sécurité 141, ou autrement l'au moins un orifice sans soupape 149, de relativement petite section, peut être disposé au bas (selon le sens de la gravité) de la paroi 147. Un tel orifice 149 est destiné à laminer des transferts de fluides dans les deux sens sans réduire une rigidité mécanique de l'organe tampon 130, et à favoriser que la pression à l'intérieur d'un sas ne puisse être trop supérieure à celle présente à l'extérieur pour empêcher, au moins en partie, des déformations permanentes de la paroi intérieure 147.

Ici, au moins une soupape d'équilibrage 148 est formée dans une partie de la paroi intérieure 147 séparant le premier sas du troisième sas et au moins une soupape d'équilibrage 148 est formée dans une autre partie de la paroi intérieure 147 séparant le troisième sas du deuxième sas.

Comme mieux visible d'après la figure 4 dans le présent exemple de réalisation, l'organe tampon 130 est ici délimité d'une part par le conduit de transfert de liquide 110 et d'autre part par le conduit de transfert de gaz 120, et partage avec chacun une paroi commune.

Cependant, l'organe tampon pourrait comporter ses propres parois de part et d'autre, qui seraient alors adjacentes d'une part à la paroi interne du conduit de transfert de gaz et d'autre part à la paroi du conduit de transfert de liquide.

Au moins le tronçon incident 112 a ici une mobilité en rotation par rapport à l'organe tampon 130.

Le système de transfert de fluide est ici configuré pour compenser une variation de longueur du conduit de transfert de liquide 110.

La variation de longueur du conduit de transfert de liquide est due à une déformation axiale (dilatation ou contraction, éventuellement combinée à l'effet de fond), i.e. selon une longueur du conduit, selon l'axe X.

A titre illustratif, en fonctionnement avec du GNL, le fluide dans le conduit de transfert de liquide est de préférence maintenu à une température comprise entre -160°C et - 140°C. Donc le conduit se trouve à une température comprise entre environ -160°C et -140°C. Or, lorsque l'écoulement de fluide est initié dans le conduit, le conduit de transfert de liquide est initialement à température ambiante. Du fait du refroidissement important, le conduit de transfert de liquide se contracte, et donc réduit de longueur. Cependant, le conduit de transfert de gaz n'est pas soumis à une même contraction. Par conséquent, le conduit de transfert de liquide réduit de longueur par rapport au conduit de transfert de gaz qui l'entoure.

Immobiliser le conduit de transfert de liquide par rapport au conduit de transfert de gaz engendrerait des contraintes trop importantes pour garantir une intégrité des conduits, et/ou impliquerait des coûts très élevés.

Il est donc intéressant que le système de transfert de fluide soit configuré pour compenser de telles variations de longueur.

Pour cela, dans le présent exemple de réalisation, l'organe tampon 130 est configuré pour glisser par rapport à au moins l'un parmi le tronçon incident 112 et le tronçon récepteur 113, i.e. coulisser par rapport au tronçon incident et/ou au tronçon récepteur. L'organe tampon 130 agit alors comme une bague qui peut se translater, verticalement, tout en étant étanche en rotation, notamment ici autour de l'axe X. Comme mieux visible figure 4, l'organe tampon 130 est fixé à au plus l'un parmi le tronçon incident et le tronçon récepteur, en l'occurrence au tronçon récepteur 113. Ainsi, dans le présent exemple de réalisation, l'organe tampon 130 est configuré pour glisser relativement au tronçon incident 112, et le tronçon récepteur 113 coulisse solidairement avec l'organe tampon 130 par rapport au tronçon incident 112.

L'organe tampon est ainsi configuré pour compenser une déformation du conduit de transfert de liquide, notamment en réalisant une jonction entre le tronçon incident 112 et le tronçon récepteur 113, par un glissement longitudinal selon l'axe longitudinal (X). Dans le présent exemple de réalisation, l'organe tampon comporte un port d'injection de gaz 161 configuré pour injecter un gaz, notamment sous pression, dans l'organe tampon, par exemple dans au moins un sas de l'organe tampon.

Le système de transfert de fluide peut alors comporter au moins un collecteur de déversement 160 configuré pour injecter du gaz dans l'organe tampon via le port d'injection de gaz 161.

Le collecteur de déversement 160 met ainsi en relation l'organe tampon avec, par exemple, un système de pressurisation et/ou l'écoulement de gaz. Dans ce dernier cas, le collecteur de déversement 160 est relié fluidiquement au conduit de transfert de gaz 120 d'une part, et au port d'injection de gaz 161 de l'organe tampon d'autre part. Par exemple, le joint de l'organe d'étanchéité dynamique 143 peut être actionné par pression à travers au moins les orifices sans soupape 149 de la paroi intérieure 147.

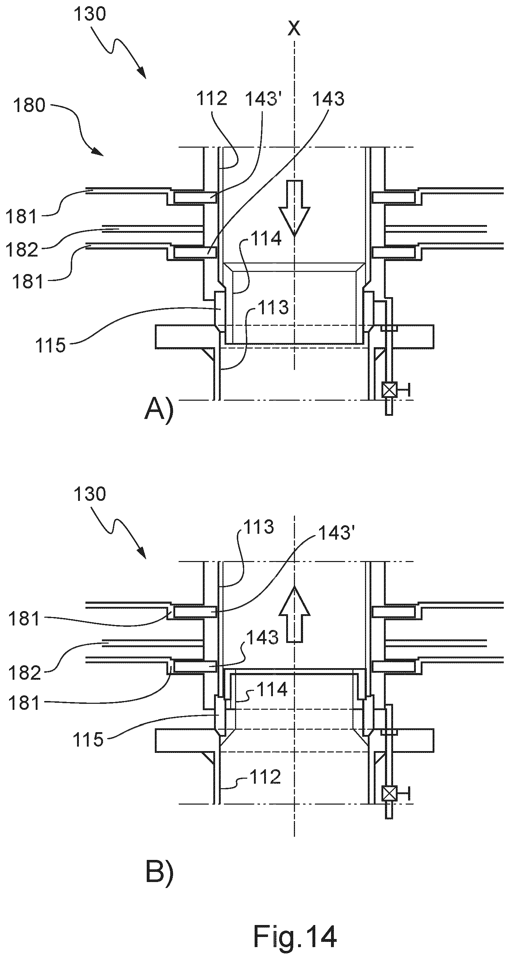

Le système de transfert de fluide 100 peut comporter le système de pressurisation (représenté selon un mode de réalisation particulier figure 14) qui comporte alors un gaz.

Le gaz du système de pressurisation est par exemple un gaz neutre.

Il s'agit par exemple d'un gaz neutre et sec dont le point d'ébullition à la pression d'utilisation est inférieur à celui du gaz liquide contenu dans le conduit de transfert de liquide 110.

Par exemple, le gaz du système de pressurisation est configuré pour être dans un état gazeux à une température supérieure ou égale à environ -160°C.

Par exemple, le gaz du système de pressurisation est choisi pour être à l'état gazeux à une température légèrement inférieure à -160°C à la pression atmosphérique quand GL est du Méthane, à environ -90°C lorsque GL est de l'Ethane, -42°C pour le Propane et -33 °C pour l'Ammoniac.

Par exemple, le gaz comporte au moins un gaz parmi : Azote, Argon, Hélium, ou Méthane, ou tout mélange d'entre eux.

Par exemple, le système de pressurisation peut comporter une bouteille de gaz sous pression.

Par exemple, le système de transfert de fluide 100 peut aussi comporter un régulateur de pression (non représenté) configuré pour réguler une pression prédéterminée dans l'organe tampon 130.

Comme également schématisé sur les figures 3 et 4, le système de transfert de fluide décrit ci-dessus fait ici partie d'un dispositif joint tournant 1000.

Le dispositif joint tournant 1000 comporte une première partie annulaire 1100 (cf. figure 4), dite fixe, et une deuxième partie annulaire 1200 mobile en rotation autour de l'axe de rotation (X) et par rapport à ladite première partie annulaire fixe 1100.

Le dispositif joint tournant présente généralement un espace interne défini par une surface interne de la première partie annulaire fixe.

Le dispositif joint tournant 1000 comporte un conduit de transfert 1110 qui entre dans la première partie annulaire fixe 1100, et débouche par un raccord de sortie 1210 relié à la deuxième partie annulaire mobile 1200.

Un écoulement traverse ainsi le dispositif joint tournant 1000 en entrant dans la première partie annulaire fixe 1100 par le conduit de transfert 1110 et en sortant par la deuxième partie annulaire mobile 1200 par le raccord de sortie 1210.

Ici, le conduit de transfert 1110 comporte au moins le conduit de transfert de gaz 120 du système de transfert de fluide 100, formant une entrée de gaz dans le dispositif joint tournant 1000, et la deuxième partie mobile 1200 comporte le raccord de sortie 1210 qui forme une sortie de gaz du dispositif joint tournant 1000.

Comme aussi visible figure 4, la deuxième partie annulaire mobile 1200 comporte ici la cloison de séparation 151.

En outre, la cloison de séparation 151 comporte au moins un passage 155 permettant à du gaz s'écoulant depuis le conduit de transfert de gaz 120 de passer de la première partie annulaire fixe 1100 à la deuxième partie annulaire mobile 1200 et ainsi traverser le dispositif joint tournant 1000 et en sortir par le raccord de sortie 1210.

Le conduit de transfert de liquide 110 du système de transfert de fluide 100 est disposé dans l'espace interne du dispositif joint tournant 1000.

Un tel dispositif joint tournant 1000 rend ainsi possible simultanément le transfert de liquide et le transfert de gaz en assurant la rotation selon l'axe vertical (X) et l'étanchéité desdits circuits.

De plus, dans le présent exemple de réalisation dans lequel le conduit de transfert de liquide 110 comporte un tronçon incident 112 et un tronçon récepteur 113, le tronçon incident 112 est fixé à la deuxième partie annulaire mobile 1200 tandis que le tronçon récepteur 113 est fixé à la première partie annulaire fixe 1100.

Par exemple ici, le dispositif joint tournant 1000 comporte un organe d'articulation 152, par exemple à roulements, qui est au moins partiellement interposé entre la première partie annulaire 1100 et la deuxième partie annulaire 1200, de sorte que la deuxième partie annulaire 1200 est mobile en rotation par rapport à la première partie annulaire 1100.

Par exemple ici, l'organe d'articulation 152 comporte une première partie 153 solidaire de la première partie annulaire fixe 1100 et une deuxième partie 154 solidaire de la deuxième partie annulaire mobile 1200, la deuxième partie 154 de l'organe d'articulation 152 étant mobile en rotation par rapport à la première partie 153 de l'organe d'articulation 152.

Le dispositif joint tournant 1000 comporte en outre ici un port d'injection de fluide 156 configuré pour injecter un fluide dans l'organe d'articulation 152.

Par exemple, le dispositif joint tournant 1000 comporte au moins un collecteur 157 configuré pour injecter du fluide dans l'organe d'articulation 152 via le port d'injection de fluide 156.

Le collecteur 157 peut être un collecteur d'huile ou autre lubrifiant (comme par exemple des glycols ou éthers de pétrole qui permettent de lubrifier à -160°C), l'huile ou autre lubrifiant étant choisis pour ne pas figer à la température de service (environ -160°C au plus bas).

Le dispositif joint tournant 1000 peut en outre comporter un joint environnemental de protection 170, appelé « weather seal », c'est-à-dire un joint qui protège le système de l'environnement marin. Un tel joint est ici configuré pour protéger l'organe d'articulation 152.

Dans un exemple de réalisation, le dispositif joint tournant 1000 comporte une gaine isolante 158.

La gaine isolante entoure au moins en partie la première partie annulaire fixe et/ou la deuxième partie annulaire mobile.

La gaine isolante comporte ici une structure à double paroi.

L'isolation de la structure externe est par exemple assurée à des endroits critiques par la présence d'une double paroi qui peut inclure tout type de matériau isolant et/ou être mise sous vide à l'intérieur de la double paroi.

Un but d'une telle isolation est de limiter les échanges thermiques qui peuvent refroidir l'organe d'articulation 152 ou favoriser le réchauffement du conduit de transfert de liquide 110.

Lorsqu'il y a écoulement du fluide, le liquide s'écoule dans le conduit de transfert de liquide 110, par exemple de haut vers le bas selon le mode de réalisation illustré figures 3 et 4.

Une partie du liquide qui s'évapore s'introduit dans l'organe tampon via la soupape de sécurité 141 et/ou le passage de fuite 142, jusqu'à assurer sensiblement un équilibrage des pressions entre l'organe tampon et le conduit de transfert de liquide 110. Une fois dans le premier sas, du fluide peut s'introduire dans le troisième sas via au moins une soupape d'équilibrage 148 et/ou au moins un orifice sans soupape 149, puis dans le deuxième sas via au moins une autre soupape d'équilibrage 148 et/ou au moins un autre orifice sans soupape 149 communiquant entre le troisième sas et le deuxième sas.

Le fluide sort de l'organe tampon 130 par au moins la soupape d'échappement 144 et/ou le passage de fuite 145. Le passage de fuite 145 sert notamment pendant une phase de mise en condition de température et pression lors d'une mise en service du système de transfert de fluide 100.

L'entrée de fluide est par exemple sécurisée par l'au moins une soupape de sécurité 141 pour introduire du fluide dans l'organe tampon 130, depuis le conduit de transfert de liquide 110, tandis que la sortie de fluide est par exemple sécurisée par l'au moins une soupape d'échappement 144, et éventuellement par l'au moins une soupape d'équilibrage 148.

Le fluide se retrouve alors dans le conduit de transfert de gaz 120, entrainé dans l'écoulement selon la flèche 121.

Dans un dispositif joint tournant 1000, le fluide passe alors dans la partie annulaire mobile 1200 par le passage 155 et sort ensuite du dispositif par le raccord de sortie 1210.

Dans l'installation 1 de la figure 1, l'empilement 1010 de dispositifs joint tournant peut par exemple comporter un premier dispositif joint tournant 1000 comportant un tel système de transfert de fluide 100.

Le premier dispositif joint tournant 1000 est alors relié par le raccord de sortie 1210 à l'unité de liquéfaction 30 et par le conduit de transfert de gaz 120 à l'entité de stockage et/ou de transport 40. Le conduit de transfert de liquide 110 du système de transfert de fluide 100 reliant l'unité de liquéfaction 30 à l'entité de stockage et/ou de transport 40. L'empilement 1010 de dispositifs joint tournant peut aussi comporter au moins un deuxième des dispositifs joint tournant 10 qui comporte un conduit d'entrée 16 qui est relié à un conduit 6 d'un réseau de canalisations subaquatiques pour extraire du gaz naturel, et un raccord de sortie 17 qui est relié à l'unité de liquéfaction 30.

Par exemple, le deuxième des dispositifs joint tournant 10 de l'empilement 1010 de dispositifs joint tournant est un dispositif joint tournant haute pression haute température (noté HPHTS).

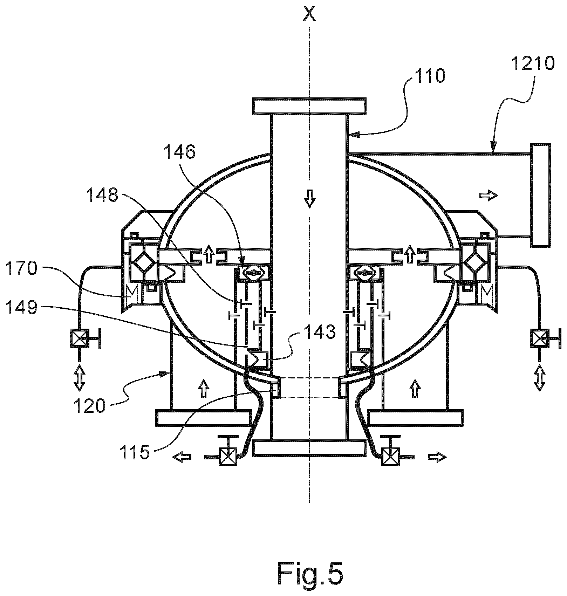

La figure 5 représente un système de transfert de fluide selon un deuxième mode de réalisation.

Ce mode de réalisation diffère du précédent en ce que l'organe d'étanchéité dynamique 143 comporte ici un joint dont un talon est disposé contre le conduit de transfert de liquide 110.

Ce mode de réalisation diffère aussi en ce que l'organe d'étanchéité dynamique 146 comporte ici deux joints face à face, chaque joint comportant une paire de lèvres en vis-à-vis de la paire de lèvres de l'autre joint, et un écarteur disposé entre les lèvres des deux joints.

Autrement dit, l'organe d'étanchéité dynamique 146 comporte ici un double joint radial avec une entretoise entre les deux pour éviter un effondrement des lèvres.

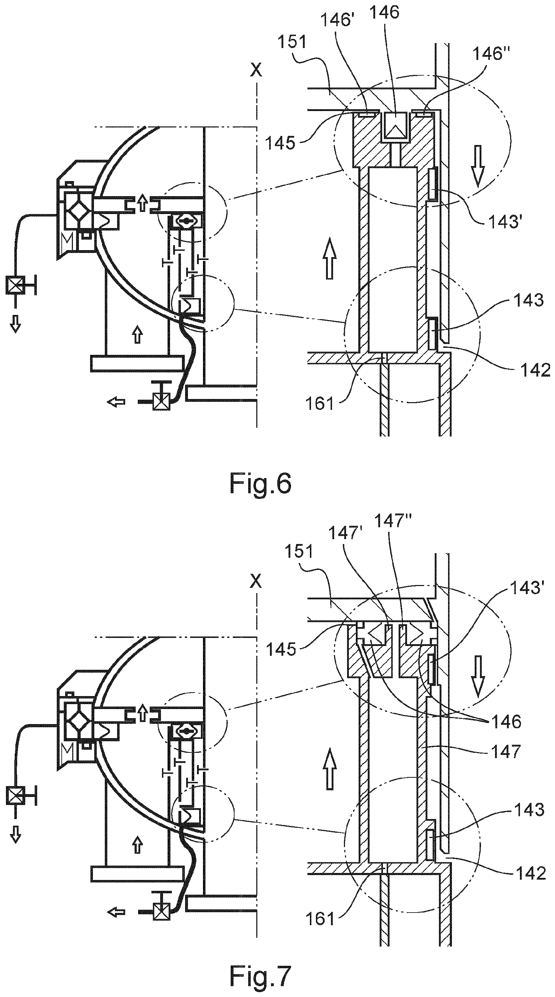

La figure 6 représente un système de transfert de fluide selon un troisième mode de réalisation.

Ce mode de réalisation diffère des précédents de par l'agencement de l'organe tampon 130.

Celui-ci est illustré en comparaison avec un détail de la figure 5 par commodité de visualisation.

Dans cet exemple, l'organe tampon 130 est dépourvu de soupape, dans la mesure où des sas non clos ne peuvent s'auto pressuriser et où le système de pilotage peut être entièrement à l'extérieur du dispositif joint tournant 1000 par l'intermédiaire du port 161. L'entrée de fluide 131 ne comporte ici que le passage de fuite 142, et la sortie de fluide ne comporte que le passage de fuite 145.

L'organe d'étanchéité dynamique 143 comporte ici un palier à la place d'un joint à lèvres.

Un autre palier 143' est en outre présent, le palier 143 et l'autre palier 143' délimitant entre eux un premier sas de l'organe tampon.

En sortie, l'organe d'étanchéité dynamique 146 comporte un joint à lèvres dont les lèvres sont orientées vers un sas de l'organe tampon dans lequel peut être injecté du gaz sous pression via le port 161. Ainsi, ici, un talon du joint à lèvres de l'organe d'étanchéité dynamique 146 est disposé contre la cloison de séparation 151.

De part et d'autre de l'organe d'étanchéité dynamique 146, le système comporte deux paliers 146', 146".

La figure 7 représente un système de transfert de fluide selon un quatrième mode de réalisation.

Ce mode de réalisation est également illustré en comparaison avec un détail de la figure 5 par commodité de visualisation.

Cependant, ce mode de réalisation diffère du précédent de par le passage de fuite 145 de la sortie de fluide.

En sortie, l'organe d'étanchéité dynamique 146 comporte deux joints à lèvres se faisant face.

Les deux joints à lèvres sont séparés ici par deux rebords 147', 147" de parties de la paroi intérieure 147, les deux rebords 147', 147" délimitant entre eux un passage vers un sas de l'organe tampon dans lequel peut être injecté du gaz sous pression via le port 161.

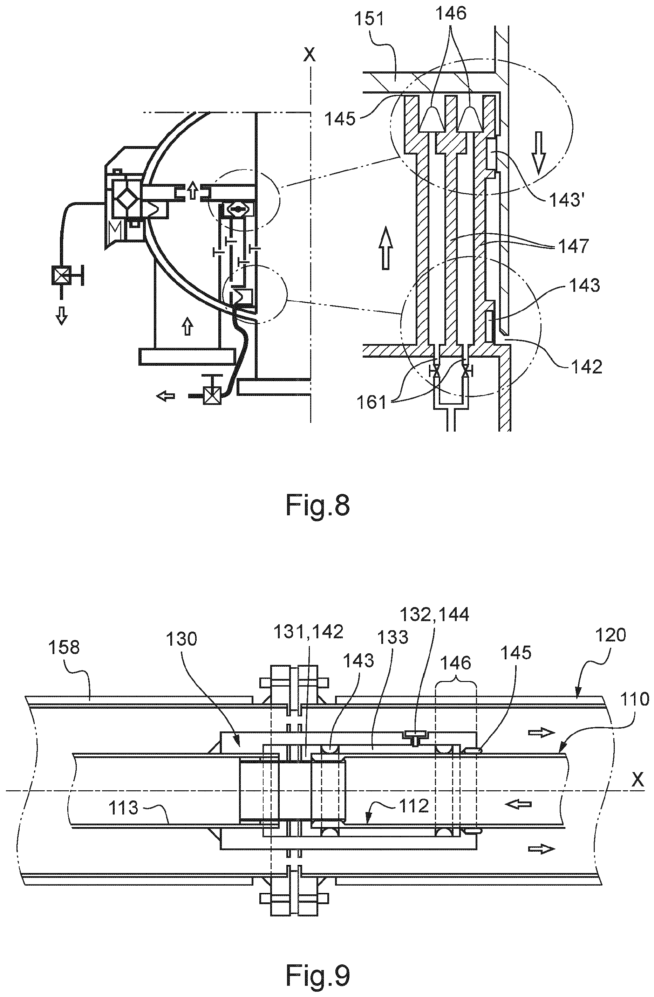

La figure 8 représente un système de transfert de fluide selon un cinquième mode de réalisation.

Ce mode de réalisation est également illustré en comparaison avec un détail de la figure 5 par commodité de visualisation.

Cependant, ce mode de réalisation diffère du précédent de par la présence d'un troisième sas, et de par une configuration du passage de fuite 145 de la sortie de fluide.

Dans cet exemple, l'organe tampon comporte deux ports d'injection 161, un premier des deux ports configuré pour injecter du gaz sous pression dans le deuxième sas, et un deuxième des deux ports configuré pour injecter du gaz sous pression dans le troisième sas.

En sortie, l'organe d'étanchéité dynamique 146 comporte deux joints à lèvres, chaque joint à lèvres étant configuré pour être pressurisé par l'un du deuxième sas et du troisième sas.

En outre, ici, un talon de chacun des joints à lèvres de l'organe d'étanchéité dynamique 146 est disposé contre la cloison de séparation 151.

La figure 9 représente un système de transfert de fluide selon un sixième mode de réalisation formant un joint de dilatation coaxial.

Un joint de dilatation coaxial est par exemple configuré pour du transfert de GNL en passage central vers un stockage d'un utilisateur et le transfert du liquide vaporisé vers l'unité de liquéfaction/stockage d'un fournisseur.

Ce type de joint permet d'absorber des mouvements différentiels longitudinaux entre le conduit de transfert de liquide 110 et le conduit de transfert de gaz 120.

Il peut fonctionner en position horizontale (orthogonal à la gravité).

Le conduit de transfert de gaz 120 n'a ici qu'une paroi encerclant le conduit de transfert de liquide 110, de sorte qu'un gaz s'écoule entre une paroi du conduit de transfert de liquide et la paroi du conduit de transfert de gaz 120.

A noter également que le conduit de transfert de gaz est formé ici de deux tronçons aboutés.

Dans un tel mode de réalisation, l'organe tampon 130 forme également une bague disposée autour d'une jonction du tronçon incident 112 et du tronçon récepteur 113 du conduit de transfert de liquide 110.

L'entrée de fluide 131 dans l'organe tampon 130 comporte ici le passage de fuite 142 formé à la jonction entre le tronçon incident 112 et le tronçon récepteur 113, et contournant l'organe d'étanchéité dynamique 143.

La sortie de fluide 132 comporte d'une part la soupape d'échappement 144, et d'autre part le passage de fuite 145 qui est dû à la présence de l'organe d'étanchéité dynamique 146, qui comporte par exemple ici un joint et un palier.

Ici, l'organe tampon ne comporte qu'un sas constituant le volume interne 133, défini entre l'organe d'étanchéité dynamique 143, l'organe d'étanchéité dynamique 146 et la soupape d'échappement 144. L'organe tampon est donc ici dépourvu de paroi intérieure 147 divisant le volume interne 133.

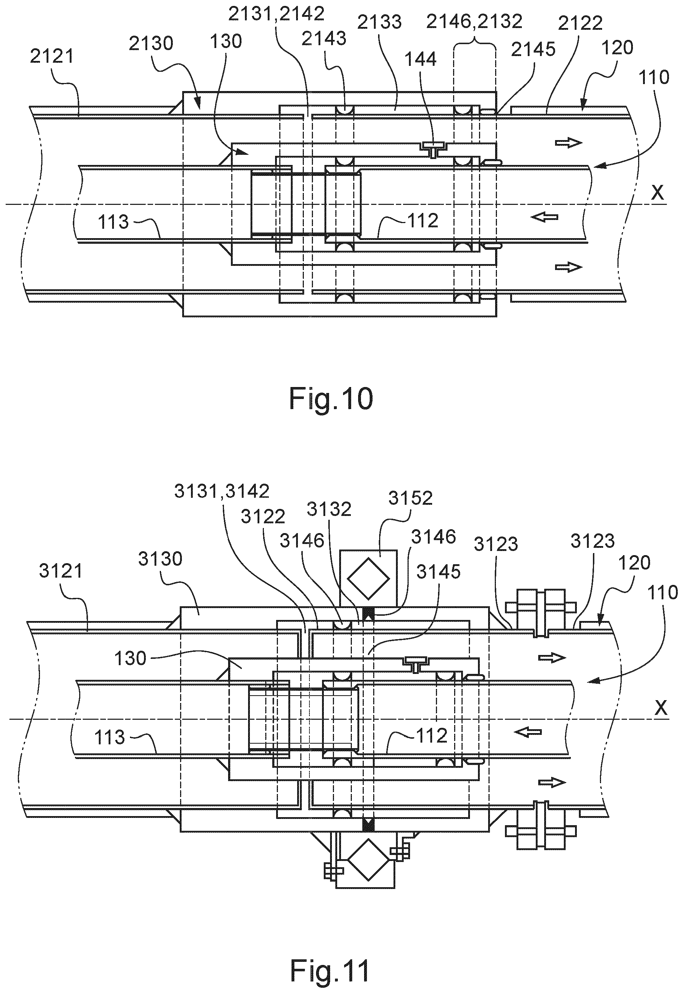

La figure 10 représente schématiquement une partie d'un système de transfert de fluide selon un septième mode de réalisation formant un joint de dilatation coaxial selon une première variante.

Ce mode de réalisation diffère du précédent en ce qu'il comporte un organe tampon additionnel 2130, entourant le conduit de transfert de gaz 120.

L'organe tampon additionnel est par exemple configuré pour guider et/ou fermer le conduit de transfert de gaz 120.

L'organe tampon additionnel 2130 est par exemple solidaire d'un premier tronçon 2121 du conduit de transfert de gaz 120, et mobile en coulissement par rapport à un deuxième tronçon 2122 du conduit de transfert de gaz 120.

Cet organe tampon additionnel 2130 comporte également un volume interne 2133, dépourvu de paroi intérieure 147, de sorte qu'il ne comporte qu'un sas.

Une entrée de fluide 2131 dans le volume interne comporte ici un passage de fuite 2142 formé par un contournement d'un organe d'étanchéité dynamique 2143 comportant ici un joint.

Dans un cas d'intégration de la partie de système représentée dans un système de transfert de fluide, une sortie de fluide 2132 comporte un passage de fuite 2145 qui est dû à la présence d'un organe d'étanchéité dynamique 2146, qui comporte par exemple ici un joint et un palier.

Le volume interne 2133 est ainsi délimité de part et d'autre par l'organe d'étanchéité dynamique 2143 et l'organe d'étanchéité dynamique 2146.

Cette représentation ne tient pas compte de l'arrangement mécanique nécessaire à la reprise des effets de fond générés par les pressions de fluides.

Ce type de réalisation pourrait accepter des petits angles de rotation entre les deux tronçons dans la mesure où les contraintes de pression et de température peuvent en induire dans des tronçons sur des parcours sinueux.

Dans un cas d'intégration de la partie de système représentée dans un autre système, par exemple pour former un connecteur pour abouter deux conduits concentriques, il peut être préférable que le passage de fuite 2145 soit évité et que l'organe d'étanchéité dynamique 2146 soit rendu étanche.

La figure 11 représente un système de transfert de fluide selon un huitième mode de réalisation formant un joint de dilatation coaxial selon une deuxième variante.

Ce mode de réalisation diffère du précédent en ce que le conduit de transfert de gaz 120 comporte ici plusieurs tronçons, en particulier trois tronçons 3121, 3122, 3123. Ce mode de réalisation forme un dispositif tournant permettant une rotation complète. La rotation est autorisée par un organe d'articulation 3152, par exemple à roulements, et/ou des paliers qui peuvent être pressurisés, par exemple par le gaz du conduit de transfert de gaz, ou un lubrifiant acceptant une température de -160°C sans figer.

Il comporte un organe tampon additionnel 3130 entourant ici deux tronçons 3121, 3122 des trois tronçons du conduit de transfert de gaz 120.

L'organe tampon additionnel 3130 est par exemple solidaire d'un premier tronçon 3121 du conduit de transfert de gaz 120, et mobile en coulissement par rapport à un deuxième tronçon 3122 du conduit de transfert de gaz 120.

Cet organe tampon additionnel 3130 comporte également un volume interne dépourvu de paroi intérieure, de sorte qu'il ne comporte qu'un sas.

Une entrée de fluide 3131 dans le volume interne comporte ici un passage de fuite 3142 formé par un jeu entre les tronçons 3121, 3122.

Une sortie de fluide 3132 comporte ici un passage de fuite 3145 qui est dû à la présence d'un organe d'étanchéité dynamique 3146, qui comporte par exemple ici un joint schématisé torique et un joint à lèvres pour l'isolation de l'organe d'articulation 3152.

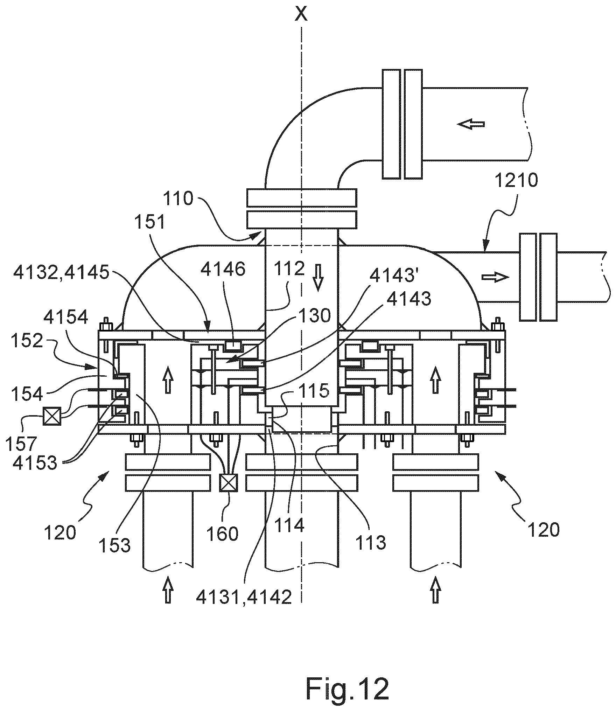

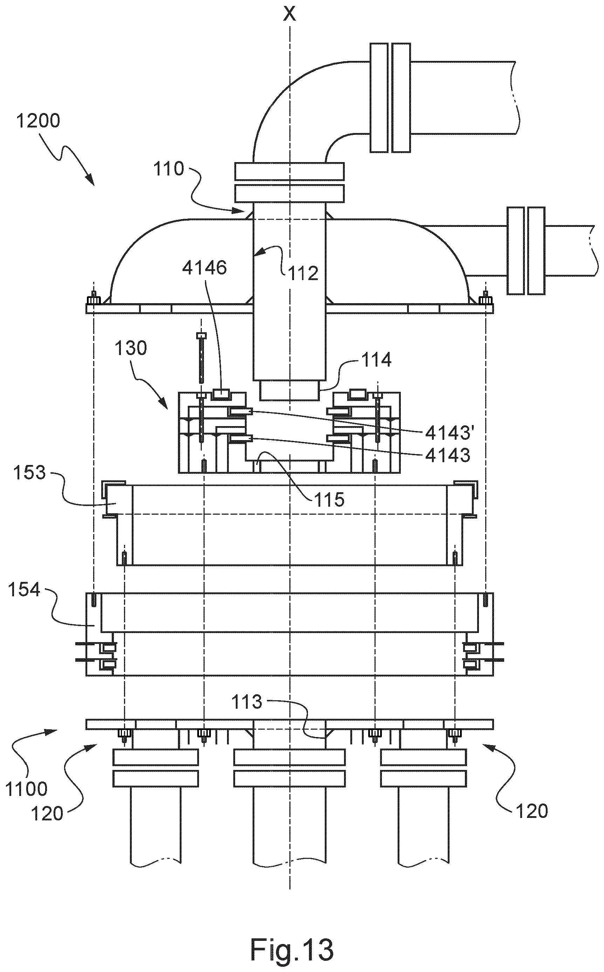

La figure 12 représente un système de transfert de fluide selon un neuvième mode de réalisation et la figure 13 représente le système de la figure 12 partiellement éclaté. Ce mode de réalisation présente un système de transfert de fluide dans un dispositif joint tournant correspondant par exemple à une bouée de chargement ou déchargement en mer.

Dans cet exemple, l'organe d'articulation 152 comporte également une première partie 153 solidaire de la première partie annulaire fixe et une deuxième partie 154 solidaire de la deuxième partie annulaire mobile. La deuxième partie 154 de l'organe d'articulation 152 est ici mobile en rotation par rapport à la première partie 153 de l'organe d'articulation 152.

Or, l'organe d'articulation 152 comporte ici des joints radiaux 4153 et des paliers de friction 4154 en lieu et place du roulement des figures 3 à 8 par exemple.

Une particularité d'un système de purge et nettoyage est obtenue à l'aide d'un gaz neutre et sec - notamment de l'azote - qui peut aussi servir à activer des joints radiaux.

Pour faire fonctionner ce dispositif, deux collecteurs, le collecteur de déversement 160 et le collecteur 157, sont utilisés : le collecteur de déversement 160 est configuré pour étancher, purger ou nettoyer l'organe tampon 130, le collecteur 157 est configuré pour les mêmes opérations sur l'organe d'articulation qui est ici configuré pour aussi étancher le conduit de transfert de gaz 120 par rapport à un environnement extérieur. Un joint appelé « weather seal », c'est-à-dire un joint externe qui protège le système de l'environnement marin, peut être ajouté si nécessaire.

Il est possible de dédoubler les ports d'entrée / sortie pour un balayage optimisé des volumes concernés.

L'utilisation de paliers permet par exemple de contribuer à réduire une isolation thermique pour protéger de l'organe d'articulation 152.

L'organe tampon 130 comporte ici une entrée de fluide 4131 ayant un passage de fuite 4142 contournant le palier 115 et des organes d'étanchéité dynamique 4143, 4143', qui comportent ici des joints radiaux.

Les organes d'étanchéité dynamique 4143, 4143' délimitent entre eux un premier sas de l'organe tampon 130.

En sortie 4132, un passage fuite 4145 est formé par un organe d'étanchéité dynamique 4146 comportant un palier. L'organe d'étanchéité dynamique est ici disposé entre une paroi de l'organe tampon 130 et la cloison de séparation 151 et en appui contre ceux-ci.

Comme l'illustre la figure 13, les éléments fixes entre eux sont solidarisés par des goujons.

L'organe tampon 130 peut être réalisé en plusieurs pièces pour permettre un montage des joints radiaux en gorges ouvertes. Pour plus de clarté d'illustration, des joints statiques (i.e. rondelles en cuivre recuit ou joints en fibres à usage cryogénique) ne sont pas représentés. L'assemblage des pièces se fait par exemple par des vis hexa-caves.

La figure 14 illustre des variantes de réalisation du conduit de transfert de liquide 110 comportant les deux tronçons incident 112 et récepteur 113, en fonction d'un sens d'écoulement de liquide dans le conduit de transfert de liquide 110, et/ou d'un pilotage en pression désiré pour des joints du système.

Le tronçon récepteur 113 peut être orienté vers le haut (figure A)) ou vers le bas (figure B)).

Ceci est bien entendu transposable à l'ensemble des modes de réalisation décrits précédemment, et dans le cadre d'un mode de réalisation selon la figure 14 B), c'est alors le tronçon récepteur 113 qui est configuré pour coulisser par rapport à l'organe tampon 130 correspondant.

Le système de transfert de fluide comporte ici un système de pressurisation 180.

Le système de pressurisation 180 est ici configuré pour nettoyer et/ou drainer l'organe tampon 130.

Dans cet exemple, le système de pressurisation 180 comporte au moins un port d'activation 181 configuré pour activer un organe d'étanchéité dynamique 143, 143', et au moins un port de purge 182, configuré pour drainé au moins une partie du volume interne de l'organe tampon.

## Revendications

1. Système (100) de transfert de fluide configuré pour équiper une installation d'exploitation de fluides (1), le système de transfert de fluide comportant :
- un conduit de transfert de liquide (110), configuré pour acheminer un gaz liquéfié, et
- un conduit de transfert de gaz (120), configuré pour acheminer un gaz sous forme de vapeur,
**caractérisé en ce que** le conduit de transfert de liquide (110) et le conduit de transfert de gaz (120) sont concentriques, le conduit de transfert de gaz (120) entourant le conduit de transfert de liquide (110),
et **en ce que** le système de transfert de fluide comporte en outre :
- un organe tampon (130), disposé entre le conduit de transfert de liquide (110) et le conduit de transfert de gaz (120) et entourant au moins en partie le conduit de transfert de liquide (110), l'organe tampon (130) étant configuré pour transférer une partie vaporisée du gaz liquéfié circulant dans le conduit de transfert de liquide (110) depuis le conduit de transfert de liquide (110) vers le conduit de transfert de gaz (120).

2. Système (100) selon la revendication 1, comportant au moins un organe d'étanchéité dynamique (143, 146).

3. Système (100) selon la revendication 2, dans lequel l'organe d'étanchéité dynamique (143, 146) est disposé dans l'organe tampon (130), par exemple à une interface entre l'organe tampon (130) et le conduit de transfert de liquide (110) et/ou le conduit de transfert de gaz (120).

4. Système (100) selon l'une quelconque des revendications 2 ou 3, dans lequel l'organe d'étanchéité dynamique (143, 146) comporte un joint, un palier, ou un ensemble composite.

5. Système (100) selon l'une quelconque des revendications 1 à 4, dans lequel l'organe tampon (130) comporte au moins une paroi intérieure (147) formant un labyrinthe pour un écoulement fluidique dans l'organe tampon (130).

6. Système (100) selon la revendication 5, dans lequel la paroi intérieure (147) divise un volume interne (133) de l'organe tampon (130) en au moins deux sas, une entrée de fluide (131) dans l'organe tampon (130) étant disposée dans un premier des deux sas, et une sortie de fluide (132) de l'organe tampon (130) étant disposée dans un deuxième des deux sas.

7. Système (100) selon l'une quelconque des revendications 1 à 6, dans lequel au moins une partie de l'entrée de fluide (131) dans l'organe tampon (130) est disposée à une altitude plus basse qu'une altitude d'au moins une partie de la sortie de fluide (132) pour assurer un niveau bas pour du liquide et un niveau haut pour du gaz.

8. Système (100) selon l'une quelconque des revendications 1 à 7, comportant un système de pressurisation (180) qui comporte un gaz, le système de transfert de fluide (100) étant configuré pour injecter du gaz du système de pressurisation (180) dans un volume interne (133) de l'organe tampon (130).

9. Système (100) selon l'une quelconque des revendications 1 à 8, configuré pour compenser une variation de longueur du conduit de transfert de liquide (110).

10. Système (100) selon la revendication 9, dans lequel le conduit de transfert de liquide (110) comporte un tronçon incident (112) muni d'un embout (114), et un tronçon récepteur (113) dans lequel est inséré l'embout, l'organe tampon (130) étant fixé à au plus l'un parmi le tronçon incident (112) et le tronçon récepteur (113).

11. Dispositif joint tournant (1000) comportant un système de transfert de fluide (100) selon l'une quelconque des revendication 1 à 10.

12. Empilement (1010) de dispositifs joint tournant comportant au moins deux dispositifs joint tournant, au moins un premier des dispositifs joint tournant de l'empilement (1010) étant selon la revendication 11.

13. Installation d'exploitation de fluide (1) comportant au moins :
- une unité de liquéfaction (30),
- une entité de stockage et/ou de transport (40),
- un premier dispositif joint tournant (1000) comportant un système de transfert de fluide (100) selon l'une quelconque des revendications 1 à 10, le premier dispositif joint tournant étant relié par le raccord de sortie à l'unité de liquéfaction (30) et par le conduit de transfert de gaz (120) à l'entité de stockage et/ou de transport (40), le conduit de transfert de liquide (110) du système de transfert de fluide reliant l'unité de liquéfaction (30) à l'entité de stockage et/ou de transport (40), et
- au moins un deuxième dispositif joint tournant (10), qui comporte un conduit d'entrée dans le dispositif joint tournant qui est relié à un conduit (6) d'un réseau de canalisations subaquatiques pour extraire du gaz naturel, et un raccord de sortie qui est relié à l'unité de liquéfaction (30).

14. Installation (1) selon la revendication 13, comportant un empilement (1010) de dispositifs joint tournant comportant au moins deux dispositifs joint tournant, l'empilement (1010) de dispositifs joint tournant comportant au moins le premier dispositif joint tournant (1000) et le deuxième dispositif joint tournant (10).

15. Installation (1) selon l'une quelconque des revendications 13 ou 14, comportant en outre un navire (3), et au moins l'un parmi le premier dispositif joint tournant (1000) ou le deuxième dispositif joint tournant (10) est disposé sur le navire (3).

## Patentansprüche

1. Fluidübertragungssystem (100), das so eingerichtet ist, dass es eine Fluidbetriebsanlage (1) ausstattet, wobei das Fluidübertragungssystem Folgendes aufweist:
- eine Flüssigkeitsübertragungsleitung (110), die so eingerichtet ist, dass sie ein verflüssigtes Gas leitet, und
- eine Gasübertragungsleitung (120), die so eingerichtet ist, dass sie ein Gas in Dampfform leitet,
**dadurch gekennzeichnet, dass** die Flüssigkeitsübertragungsleitung (110) und die Gasübertragungsleitung (120) konzentrisch sind, wobei die Gasübertragungsleitung (120) die Flüssigkeitsübertragungsleitung (110) umgibt,
und dass das Fluidübertragungssystem ferner Folgendes aufweist:
- ein Pufferorgan (130), das zwischen der Flüssigkeitsübertragungsleitung (110) und der Gasübertragungsleitung (120) angeordnet ist und die Flüssigkeitsübertragungsleitung (110) mindestens teilweise umgibt, wobei das Pufferorgan (130) so eingerichtet ist, dass es einen verdampften Teil des in der Flüssigkeitsübertragungsleitung (110) zirkulierenden verflüssigten Gases von der Flüssigkeitsübertragungsleitung (110) zu der Gasübertragungsleitung (120) überträgt.

2. System (100) nach Anspruch 1, das mindestens ein dynamisches Dichtelement (143, 146) aufweist.

3. System (100) nach Anspruch 2, wobei das dynamische Dichtelement (143, 146) in dem Pufferelement (130) angeordnet ist, beispielsweise an einer Schnittstelle zwischen dem Pufferelement (130) und der Flüssigkeitsübertragungsleitung (110) und/oder der Gasübertragungsleitung (120).

4. System (100) nach einem der Ansprüche 2 oder 3, wobei das dynamische Dichtelement (143, 146) eine Dichtung, ein Lager oder eine Verbundbaugruppe aufweist.

5. System (100) nach einem der Ansprüche 1 bis 4, wobei das Pufferorgan (130) mindestens eine Innenwand (147) aufweist, die ein Labyrinth für einen Fluidfluss in das Pufferorgan (130) bildet.

6. System (100) nach Anspruch 5, wobei die Innenwand (147) ein inneres Volumen (133) des Pufferorgans (130) in mindestens zwei Schleusen teilt, wobei ein Fluideingang (131) in dem Pufferorgan (130) in einer der beiden Schleusen angeordnet ist und ein Fluidausgang (132) des Pufferorgans (130) in einer zweiten der beiden Schleusen angeordnet ist.

7. System (100) nach einem der Ansprüche 1 bis 6, wobei mindestens ein Teil des Fluideingangs (131) in das Pufferorgan (130) in einer Höhe angeordnet ist, die niedriger ist als eine Höhe von mindestens einem Teil des Fluidausgangs (132), um einen niedrigen Füllstand für Fluid und einen hohen Füllstand für Gas sicherzustellen.

8. System (100) nach einem der Ansprüche 1 bis 7, das ein Druckbeaufschlagungssystem (180) aufweist, das ein Gas aufweist, wobei das Fluidübertragungssystem (100) so eingerichtet ist, dass es Gas aus dem Druckbeaufschlagungssystem (180) in ein Innenvolumen (133) des Pufferorgans (130) injiziert.

9. System (100) nach einem der Ansprüche 1 bis 8, das dazu konfiguriert ist, um eine Längenänderung der Flüssigkeitsübertragungsleitung (110) auszugleichen.

10. System (100) nach Anspruch 9, wobei die Flüssigkeitsübertragungsleitung (110) einen Zwischenabschnitt (112) mit einem Endstück (114) und einen Aufnahmeabschnitt (113) aufweist, in den das Endstück eingesetzt ist, wobei das Pufferorgan (130) an höchstens einem der Zwischenabschnitte (112) und dem Aufnahmeabschnitt (113) befestigt ist.

11. Drehgelenkvorrichtung (1000), die ein Fluidübertragungssystem (100) nach einem der Ansprüche 1 bis 10 aufweist.

12. Stapel (1010) von Drehgelenkvorrichtungen, der mindestens zwei Drehgelenkvorrichtungen aufweist, wobei mindestens eine der ersten Drehgelenkvorrichtungen des Stapels (1010) nach Anspruch 11 ist.

13. Fluidbetriebsanlage (1), die mindestens Folgendes aufweist:
- eine Verflüssigungseinheit (30),
- eine Lager- und/oder Transporteinheit (40),
- eine erste Drehgelenkvorrichtung (1000), die ein Fluidübertragungssystem (100) nach einem der Ansprüche 1 bis 10 aufweist, wobei die erste Drehgelenkvorrichtung durch den Ausgangsanschluss mit der Verflüssigungseinheit (30) und durch die Gasübertragungsleitung (120) mit der Speicher- und/oder Transporteinheit (40) verbunden ist, wobei die Flüssigkeitsübertragungsleitung (110) des Fluidübertragungssystems die Verflüssigungseinheit (30) mit der Speicher- und/oder Transporteinheit (40) verbindet, und
- mindestens eine zweite Drehgelenkvorrichtung (10), die einen Eingangskanal in die Drehgelenkvorrichtung aufweist, der mit einem Kanal (6) eines Unterwasserrohrnetzes zur Gewinnung von Erdgas verbunden ist, und einen Ausgangsanschluss, der mit der Verflüssigungseinheit (30) verbunden ist.

14. Anlage (1) nach Anspruch 13, die einen Stapel (1010) von Drehgelenkvorrichtungen aufweist, der mindestens zwei Drehgelenkvorrichtungen aufweist, wobei der Stapel (1010) von Drehgelenkvorrichtungen mindestens die erste Drehgelenkvorrichtung (1000) und die zweite Drehgelenkvorrichtung (10) aufweist.

15. Anlage (1) nach einem der Ansprüche 13 oder 14, die ferner ein Schiff (3) aufweist, und mindestens eine der ersten Drehgelenkvorrichtung (1000) oder der zweiten Drehgelenkvorrichtung (10) ist auf dem Schiff (3) angeordnet.

## Claims

1. Fluid-transfer system (100) configured to equip an installation using fluids (1), the fluid-transfer system comprising:
- a liquid transfer pipe (110), configured to carry a liquefied gas, and
- a gas transfer pipe (120), configured to carry a gas in vapour form,
**characterised in that** the liquid transfer pipe (110) and the gas transfer pipe (120) are concentric, the gas transfer pipe (120) surrounding the liquid transfer pipe (110),
and **in that** the fluid-transfer system furthermore includes:
- a buffer member (130), disposed between the liquid transfer pipe (110) and the gas transfer pipe (120) and at least partially surrounding the liquid transfer pipe (110), the buffer member (130) being configured to transfer an evaporated portion of the liquefied gas circulating in the liquid transfer pipe (110) from the liquid transfer pipe (110) to the gas transfer pipe (120).

2. System (100) according to claim 1, comprising at least one dynamic sealing member (143, 146).

3. System (100) according to claim 2, wherein the dynamic sealing member (143, 146) is disposed in the buffer member (130), for example at an interface between the buffer member (130) and the liquid transfer pipe (110) and/or the gas transfer pipe (120).

4. System (100) according to any one of claims 2 or 3, wherein the dynamic sealing member (143, 146) includes a seal, a bearing, or a composite assembly.

5. System (100) according to any one of claims 1 to 4, wherein the buffer member (130) includes at least one inner wall (147) forming a labyrinth for a fluidic flow in the buffer member (130).

6. System (100) according to claim 5, wherein the inner wall (147) divides an internal volume (133) of the buffer member (130) into at least two chambers, a fluid inlet (131) in the buffer member (130) being disposed in a first of the two chambers, and a fluid outlet (132) of the buffer member (130) being disposed in a second of the two chambers.

7. System (100) according to any one of claims 1 to 6, wherein at least one part of the fluid inlet (131) in the buffer member (130) is disposed at a lower height than a height of at least one part of the fluid outlet (132) to ensure a low level for liquid and a high level for gas.

8. System (100) according to any one of claims 1 to 7, comprising a pressurisation system (180) which includes a gas, the fluid transfer system (100) being configured to inject gas from the pressurisation system (180) in the internal volume (133) of the buffer member (130).

9. System (100) according to any one of claims 1 to 8, configured to compensate a length variation of the liquid transfer pipe (110).

10. System (100) according to claim 9, wherein the liquid transfer pipe (110) includes an incident section (112) equipped with an endpiece (114), and a receiving section (113) wherein the endpiece is inserted, the buffer member (130) being fastened to at most one from among the incident section (112) and the receiving section (113).

11. Swivel joint device (1000) comprising a fluid transfer system (100) according to any one of claims 1 to 10.

12. Stack (1010) of swivel joint devices comprising at least two swivel joint devices, at least a first of the swivel joint devices of the stack (1010) being according to claim 11.

13. Fluid-use installation (1) comprising at least:
- a liquefaction unit (30),
- a storage and/or transport entity (40),
- a first swivel joint device (1000) comprising a fluid-transfer system (100) according to any one of claims 1 to 10, the first swivel joint device being connected by the outlet coupling to the liquefaction unit (30) and by the gas transfer pipe (120) to the storage and/or transport entity (40), the liquid transfer pipe (110) of the fluid-transfer system connecting the liquefaction unit (30) to the storage and/or transport entity (40), and
- at least a second swivel joint device (10), which includes an inlet pipe into the second swivel joint device which is connected to a pipe (6) of an underwater pipe system to extract natural gas, and an outlet coupling which is connected to the liquefaction unit (30).

14. Installation (1) according to claim 13, comprising a stack (1010) of swivel joint devices comprising at least two swivel joint devices, the stack (1010) of swivel joint devices comprising at least the first swivel joint device (1000) and the second swivel joint device (10).

15. Installation (1) according to any one of claims 13 or 14, further comprising a ship (3), and at least one from among the first swivel joint device (1000) or the second swivel joint device (10) is disposed on the ship (3).
